# EUROPÄISCHE PATENTSCHRIFT

(11) **EP 2 909 504 B1**
(45) Veröffentlichungstag und Bekanntmachung des Hinweises auf die Patenterteilung: **25.04.2018**
(21) Anmeldenummer: 13776497.3
(22) Anmeldetag: 14.10.2013
(51) Int. Cl.: F16D 3/12, F16F 15/12, F16H 45/02, F16F 15/14, F16F 15/133, F16F 15/131

(54) **DREHSCHWINGUNGSDÄMPFUNGSANORDNUNG**
TORSIONAL VIBRATION DAMPER ASSEMBLY
ENSEMBLE AMORTISSEUR DE VIBRATIONS EN DE ROTATION

(30) Priorität: 17.10.2012 DE 102012218921
(43) Veröffentlichungstag der Anmeldung: 26.08.2015
(73) Patentinhaber: ZF Friedrichshafen AG, 88046 Friedrichshafen (DE)
(72) Erfinder: DÖGEL, Thomas, 97720 Nüdlingen (DE); GROSSGEBAUER, Uwe, 97250 Erlabrunn (DE); ORLAMÜNDER, Andreas, 97453 Schonungen (DE)
(86) Internationale Anmeldenummer: PCT/EP2013/071424
(87) Internationale Veröffentlichungsnummer: WO 2014/060353

(56) Entgegenhaltungen:
- DE-A1- 3 023 300
- DE-A1- 19 919 458
- DE-A1-102010 038 782
- DE-A1-102010 053 542

## Beschreibung

Ausführungsbeispiele der vorliegenden Erfindung betreffen im Allgemeinen Drehschwingungsdämpfungsanordnungen, vorzugsweise für den Antriebsstrang eines Fahrzeugs, und insbesondere Drehschwingungsdämpfungsanordnungen mit z.B. radial wirkenden Vorspannfedern und beispielsweise in Umfangsrichtung wirkenden Rückstellelementen, deren jeweilige Hauptachsen nicht koaxial verlaufen.

Um Schwingungen, insbesondere Drehschwingungen, beispielsweise verursacht durch rotierende Bauteile (wie z.B. eine Kurbelwelle) in einem Kraftfahrzeug, zu dämpfen, sind zahlreiche Konzepte bekannt. Neben Ausgleichswellen können zusätzlich oder alternativ sogenannte Drehschwingungsdämpfer eingesetzt werden. Derartige Drehschwingungsdämpfer umfassen allgemein Dämpfungs- bzw. Auslenkungsmassen, durch deren Massenträgheit unerwünschte Drehschwingungen gedämpft werden können. Ein bekanntes drehmomentübertragendes Drehschwingungsdämpfungskonzept, um beispielsweise das Schwungmassensystem des Motors vom Getriebe und Antriebsstrang zu entkoppeln, ist z. B. das Zweimassenschwungrad mit einer Primärschwungmasse, einer Sekundärschwungmasse und einer dazwischen gelagerten Drehschwingungsdämpfungsanordnung.

Aus der DE 10 2010 053 542 A1 ist eine Drehschwingungsdämpfungsanordnung bzw. ein Tilger bekannt, bei welcher Auslenkungsmassenpendeleinheiten eine ringartig um einen Träger herum angeordnete, vermittels einer Mehrzahl von an dieser festgelegten und nach radial innen sich erstreckenden, elastisch verformbaren Rückstellelementen (z.B. Blattfedern) bezüglich des Trägers in Umfangsrichtung abgestützte Auslenkungsmasse umfasst. Im Träger sind radial verlagerbar Fliehgewichte bzw. Abstützelemente vorgesehen, an welchen die nach radial innen erstreckenden Rückstellelemente in Umfangsrichtung an jeweiligen Trägerabstützbereichen bzw. Kraftangriffspunkten abstützbar sind. Die Abstützelemente sind durch diesen zugeordnete und an der Auslenkungsmasse sich abstützende Vorspannfedern nach radial innen in eine Basislage vorgespannt. Bei geringer oder nicht vorhandener Fliehkraftbelastung sind die Fliehgewichte bzw. Abstützelemente unter der Vorspannwirkung in der Basislage gehalten. Mit zunehmender Drehzahl verlagern sich die Abstützelemente fliehkraftbedingt unter zunehmender Kompression der Vorspannfedern nach radial außen, wodurch die Trägerabstützbereiche, an welchen sich die nach radial innen von der Auslenkungsmasse sich erstreckenden Rückstellelemente abstützen können, nach radial außen verschoben werden. Dies verändert die zur Auslenkung zur Verfügung stehende freie Länge der Rückstellelemente zwischen ihrer Anbindung an die Auslenkungsmasse und den jeweiligen Trägerabstützbereichen, in welchen sie über die Abstützelemente bezüglich des Trägers in Umfangsrichtung abgestützt sind. Diese Variation der freien Länge beeinflusst somit auch die effektive Pendellänge, deren Verkürzung zu einer Erhöhung der Eigenfrequenz der Auslenkungsmassenpendeleinheiten führt. Dies hat zur Folge, dass drehzahlabhängig die Steifigkeit und damit auch die Eigenfrequenz der Auslenkungsmassenpendeleinheiten veränderbar ist, in einem Sinne, dass mit zunehmender Drehzahl die Steifigkeit und somit auch die Eigenfrequenz der Drehschwingungsdämpfungsanordnung zunimmt. Damit soll versucht werden, eine Drehzahladaption der Auslenkungsmassenpendeleinheiten an eine Schwingungsanregungsordnung zu erreichen.

Bekannte Drehschwingungsdämpfungsanordnungen besitzen also ein Verstellsystem, das in Abhängigkeit von der Drehzahl die Eigenfrequenz der Drehschwingungsdämpfungsanordnung bzw. des Tilgers verstimmt, um somit gezielt eine Schwingungsanregungsordnung über einen breiten Drehzahlbereich zu tilgen. Das Verstellsystem besteht dabei aus vorzugsweise einer Mehrzahl von Fliehgewichten bzw. Abstützelementen, die symmetrisch am Umfang des Trägers verteilt sind, um Unwucht zu minimieren, und auf die unter Drehzahl eine Zentrifugalkraft wirkt. Des Weiteren umfasst das Verstellsystem wenigstens ein Rückstellelement bzw. eine Verstellfeder, die eine rückstellende Kraft nach radial innen auf das Fliehgewicht ausübt. Die Zentrifugalkraft der Fliehgewichte und die Rückstellkräfte der Federn werden so aufeinander abgestimmt, dass sich eine gewünschte Position des Fliehgewichts in Abhängigkeit von der anliegenden Drehzahl einstellt (Ordnungsnachführung). Die Position eines Fliehgewichts bestimmt den Kraftangriffs- bzw. Pendelpunkt an einem Rückstellelement (z.B. Biegefeder bzw. Tilgerfeder) und beeinflusst somit direkt die Steifigkeit und damit die Eigenfrequenz des Tilgers. Durch Umfangsspiel (d.h. Spiel in Umfangsrichtung) zwischen Rückstellelement und Kraftangriffs- bzw. Pendelpunkt(en) kann die Steifigkeitskennlinie des Tilgers beeinflusst werden.

Bei herkömmlichen Drehschwingungsdämpfungsanordnungen sind die Rückstellelemente, beispielsweise in Form von Blattfedern, innerhalb von (radiale Rückstellkräfte ausübende) Vorspannfedern bzw. Sensorfedern angeordnet. Bei einer derartigen Anordnung der Rückstellelemente ist deren Schwingwinkel zur Drehschwingungsdämpfung jedoch durch die Innenabmessungen der Sensorfedern begrenzt.

Es ist daher eine Aufgabe der vorliegenden Erfindung ein demgegenüber verbessertes Konzept für Drehschwingungsdämpfungsanordnungen bzw. Tilger bereitzustellen.

Diese Aufgabe wird gelöst durch eine Drehschwingungsdämpfungsanordnung und einen Antriebsstrang für ein Fahrzeug mit den Merkmalen gemäß den unabhängigen Patentansprüchen.

Weitere vorteilhafte Ausgestaltungen und Weiterbildungen sind Gegenstand der abhängigen Patentansprüche und der nachfolgenden detaillierten Beschreibung.

Es ist eine Erkenntnis der vorliegenden Erfindung, dass zur Vergrößerung der möglichen Schwingwinkel der Rückstellelemente bzw. der Tilgerfedern eine bauliche Trennung zwischen den Tilger- und Sensorfedern vorgenommen werden kann. Während bei herkömmlichen Drehschwingungsdämpfungsanordnungen die Tilgerfedern innerhalb der Sensorfedern angeordnet sind, d.h. die Haupt- bzw. Längsachse einer Tilgerfeder (z.B. Rückstellkraft in Umfangsrichtung) im Wesentlichen koaxial zu einer Haupt- bzw. Längsachse einer Sensorfeder (z.B. radiale Rückstellkraft) verläuft, sehen Ausführungsbeispiele der vorliegenden Erfindung Drehschwingungsdämpfungsanordnungen vor, bei denen die Tilgerfedern außerhalb der Sensorfedern angeordnet sind, d.h. die Haupt- bzw. Längsachse einer Tilgerfeder (z.B. Rückstellelement in Umfangsrichtung) nicht koaxial zu einer Haupt- bzw. Längsachse einer Sensorfeder (z.B. radiales Rückstellelement) verläuft.

Gemäß einem ersten Aspekt sehen Ausführungsbeispiele dazu eine Drehschwingungsdämpfungsanordnung vor, insbesondere für den Antriebsstrang eines Brennkraft- und/oder Elektro-Fahrzeugs, umfassend eine um eine Drehachse drehbare Trägeranordnung, eine relativ zu der Trägeranordnung in Umfangsrichtung bewegliche Auslenkungsmasse, wobei die Trägeranordnung und die Auslenkungsmasse über eine Mehrzahl in Umfangsrichtung angeordneter und sich von der Auslenkungsmasse in Richtung Trägeranordnung erstreckender, elastischer Rückstellelemente relativ zueinander verdrehbar gekoppelt sind. Ein (z.B. in Umfangsrichtung wirkendes) Rückstellelement (insbesondere aber alle Rückstellelemente) ist dabei jeweils um wenigstens einen unter Fliehkrafteinwirkung in radialer Richtung beweglichen und dem Rückstellelement zugeordneten Kraftangriffspunkt verform- bzw. pendelbar. Der bewegliche Kraftangriffspunkt ist vermittels einer Vorspann- bzw. Sensorfeder mit einer radial in Richtung der Drehachse wirkenden Vorspannkraft beaufschlagt. Die Drehschwingungsdämpfungsanordnung ist nun bei Ausführungsbeispielen dadurch gekennzeichnet, dass eine Hauptachse der Vorspannfeder und eine Hauptachse des Rückstellelements nicht koaxial verlaufen. Stattdessen kann das Rückstellelement (d.h. eine Tilgerfeder) in Umfangsrichtung außerhalb seiner zugeordneten Vorspannfeder angeordnet sein. Insbesondere können in Umfangsrichtung außerhalb der Vorspannfeder und zu beiden Seiten der Vorspannfeder dieser zugeordnete bzw. mit dieser zusammenwirkende Rückstellelemente angeordnet sein. Dabei können die Hauptachse der Vorspannfeder und die Hauptachse eines der Vorspannfeder zugeordneten Rückstellelements schräg zueinander, jeweils in radialer Richtung, d.h. zur Drehachse weisend, verlaufen. Beispielsweise können Vorspannfedern und Rückstellelemente in Umfangsrichtung abwechselnd um den Träger herum angeordnet sein, d.h. zwischen zwei Vorspannfedern kann wenigstens ein Rückstellelement angeordnet sein. Andere Anordnungen sind ebenfalls möglich und werden weiter unten auch noch exemplarisch beschrieben.

Ein in Umfangsrichtung wirkendes Rückstellelement kann gemäß Ausführungsbeispielen eine Rückstellfeder, insbesondere eine Blattfeder oder eine Stabfeder, insbesondere mit linearer Kraftkennlinie, sein.

Gemäß Ausführungsbeispielen kann ein dem außerhalb der Vorspannfeder angeordneten Rückstellelement zugeordneter beweglicher Kraftangriffspunkt durch ein im Wesentlichen in radialer Richtung verfahrbares Fliehgewicht geführt bzw. bewegt werden. Dabei ist das Fliehgewicht, z.B. ein Gleitstein mit Fliehmasse, vermittels der Vorspannfeder mit der radial nach innen wirkenden Vorspannkraft beaufschlagt, so dass sich das Fliehgewicht bei fehlender Auslenkung der Auslenkungsmasse, d.h. in Ruhelage der Drehschwingungsdämpfungsanordnung, in einer radialen inneren Basislage befindet. Sowohl das Fliehgewicht als auch der Kraftangriffspunkt können sich bei Ausführungsbeispielen in separaten radialen Führungen der Trägeranordnung bewegen. Das bedeutet, dass auch die Hauptachse einer Führung für das Fliehgewicht und die Hauptachse einer Führung für einen Kraftangriffspunkt bei manchen Ausführungsbeispielen nicht koaxial verlaufen.

Bei einigen Ausführungsbeispielen ist eine Relativlage zwischen einem Kraftangriffspunkt und einem mit dem Kraftangriffspunkt zusammenwirkenden Fliehgewicht unter Fliehkrafteinwirkung, d.h. bei Auslenkung der Auslenkungsmasse, variabel. Dies kann insbesondere dann der Fall sein, wenn die Hauptachse der Vorspannfeder und die Hauptachse des Rückstellelements beide radial in unterschiedliche Richtungen verlaufen. In einem solchen Fall laufen Kraftangriffs- bzw. Pendelpunkt, der sich unter Fliehkrafteinwirkung entlang des Rückstellelements bewegt, und Fliehgewicht, welches sich unter Fliehkrafteinwirkung beispielsweise entlang der Führung der Vorspannfeder bewegt, unter Fliehkrafteinwirkung in Umfangsrichtung auseinander - bei nachlassender Fliehkraft wieder näher zusammen.

Ein Kraftangriffspunkt kann bei Auslenkungen der Auslenkungsmasse vermittels einer oder mehrerer Führungen geführt werden. Eine erste Führungsrichtung erstreckt sich dabei entlang der Haupt- bzw. Längsachse des dem Kraftangriffspunkt zugeordneten Rückstellelements, d.h. beispielsweise entlang einer länglichen Blatt- oder Biegefeder. Eine zweite Führung kann sich senkrecht dazu erstrecken, d.h. senkrecht zur Hauptachse des dem Kraftangriffspunkt zugeordneten Rückstellelements, so dass bei niedriger Drehzahl der Drehschwingungsdämpfungsanordnung der Kraftangriffspunkt - in Umfangsrichtung gesehen - näher zu dem Fliehgewicht oder der Vorspannfeder positioniert ist als bei hoher Drehzahl. Die zweite Führung des Kraftangriffspunkt kann dabei beispielsweise durch an das Fliehgewicht angeformte Führungsarme mit Führungsschlitzen realisiert werden, in welchen sich der Kraftangriffspunkt unter Fliehkrafteinwirkung im Wesentlichen senkrecht zur Längsachse des Rückstellelements hin und her bewegen kann. Bei Ausführungsbeispielen kann ein beweglicher Kraftangriffspunkt durch einen entlang der Hauptachse des zugeordneten Rückstellelements verfahrbaren Anlagebolzen für das Rückstellelement bereitgestellt werden. Der Anlagebolzen kann sich bei manchen Ausführungsbeispielen auch in einem Fliehgewicht befinden, welches entlang des Rückstellelements verfahrbar ist.

Manche Ausführungsbeispiele sehen vor, dass einer Vorspannfeder eine Mehrzahl von zu der Vorspannfeder nicht koaxial bzw. außerhalb verlaufenden Rückstellelementen zugeordnet ist, so dass Kraftangriffspunkte der zugeordneten Rückstellelemente vermittels der Vorspannfeder und wenigstens einem Fliehgewicht gemeinsam unter Fliehkrafteinwirkung in radialer Richtung bewegt werden. Somit können mit einem Fliehgewicht bzw. einer Vorspannfeder mehrere Rückstellelemente betätigt werden, wodurch die erforderliche Anzahl der Vorspann- bzw. Sensorfedern und der Fliehgewichte verringert werden kann.

Bei einigen Ausführungsbeispielen ist vorgesehen, dass ein unter Fliehkrafteinwirkung entlang der Hauptachse des Rückstellelements geführtes Fliehgewicht, welches wenigstens einen Kraftangriffspunkt für das Rückstellelement umfasst, mit der Vorspannfeder vermittels wenigstens einem Gelenk gekoppelt ist, so dass ein Winkel zwischen der Hauptachse der Vorspannfeder und dem Fliehgewicht variabel ist. Die Bewegungsachse des Fliehgewichts am Rückstellelement und die Hauptachse der Vorspannfeder sind bei diesem Ausführungsbeispiel nicht koaxial, sondern verschieden voneinander. Fliehgewicht und Vorspann- bzw. Sensorfeder sind nicht starr miteinander gekoppelt, sondern können über eine Pendelstütze bzw. einen Pendelarm miteinander gekoppelt sein, welcher an das Fliehgewicht über ein erstes Gelenk und an einer Sensormasse über ein zweites Gelenk angebunden sein kann. Durch eine derartige gelenkbehaftete Kopplung zwischen Vorspannfeder und einem Kraftangriffs- oder Pendelpunkt an einem Fliehgewicht kann eine degressive oder progressive Steifigkeitszunahme des Rückstellelements mit wachsender Drehzahl erreicht werden.

Des Weiteren sind Ausführungsbeispiele von Drehschwingungsdämpfungsanordnungen vorgesehen, bei denen ein erstes mit der Vorspannfeder zusammenwirkendes bzw. gekoppeltes Rückstellelement in Ruhelage der Drehschwingungsdämpfungsanordnung, d.h. in unausgelenktem Zustand der Auslenkungsmasse, in einer ersten Richtung vorgespannt ist und ein zweites mit der Vorspannfeder zusammenwirkendes bzw. gekoppeltes Rückstellelement in der Ruhelage in einer zweiten, der ersten Richtung entgegengesetzten Richtung vorgespannt ist. Dabei können sich - je nach Ausführungsform - das erste und das zweite Rückstellelement in Umfangsrichtung auf unterschiedlichen Seiten der Vorspannfeder befinden oder aber auf derselben Seite. Im letzteren Fall bilden das erste und das zweite Rückstellelement ein Paar von in Umfangsrichtung unmittelbar nebeneinander angeordneten Rückstellelementen, im ersten Fall ein Paar von in Umfangsrichtung auf gegenüberliegenden Seiten der Vorspannfeder angeordneten Rückstellelementen. Im Allgemeinen kann die Drehschwingungsdämpfungsanordnung eine Mehrzahl von in Umfangrichtung angeordneten Paaren von Rückstellelementen aufweisen.

Die geometrischen Verhältnisse und die Vorspannungskraftverhältnisse sind bei Ausführungsbeispielen dabei bevorzugt derart gewählt, dass sich durch die entgegengesetzten Vorspannungen ergebende entgegengesetzte Vorspannungskräfte in der Ruhelage betragsmäßig gleich sind. Somit herrscht ein Kräftegleichgewicht und unerwünschte systematische Fehler können vermieden werden.

Bei Ausführungsbeispielen kann das erste Rückstellelement des Paars in Ruhelage der Drehschwingungsdämpfungsanordnung in der ersten Richtung durch unmittelbaren Kontakt zu bzw. unmittelbare Anlage an einem dem ersten Rückstellelement zugeordneten Kraftangriffspunkt vorgespannt sein, während das zweite Rückstellelement des Paars in der Ruhelage in der zweiten Richtung durch unmittelbaren Kontakt zu bzw. unmittelbare Anlage an einem dem zweiten Rückstellelement zugeordneten Kraftangriffspunkt vorgespannt sein kann. In anderen Worten ausgedrückt können das erste und das zweite Rückstellelement zu wenigstens einem ihrer jeweils zugeordneten Kraftangriffspunkte jeweils ohne Umfangsbewegungsspiel (d.h. Spiel in Umfangsrichtung) angeordnet sein. Durch den jeweiligen unmittelbaren (Druck-) Kontakt zwischen Rückstellelement (z.B. Blattfeder) und Kraftangriffspunkt ergibt sich bereits in der Ruhelage eine leichte Durchbiegung des Rückstellelements, welche in einem Bereich von 1% bis 10% der maximal zulässigen Durchbiegung liegen kann. Aufgrund der Vorspannung in Ruhelage kann ein Umfangsspiel und damit ein kraftfreier Anlagewechsel vermieden werden, der ansonsten eine Summensteifigkeit der Drehschwingungsdämpfungsanordnung negativ beeinflussen würde.

Bei manchen Ausführungsbeispielen kann jedem der beiden der Vorspannfeder zugeordneten Rückstellelemente jeweils genau ein in radialer Richtung beweglicher Kraftangriffspunkt zugeordnet sein (einseitige Betätigung). Dabei sind die jeweiligen Kraftangriffspunkte des ersten und des zweiten Rückstellelements auf jeweils unterschiedlichen Seiten der Rückstellelemente angeordnet, um die entgegengesetzten Vorspannungskräfte in der Ruhelage zu erhalten. In anderen Worten ausgedrückt kann ein erstes Rückstellelement beispielsweise um einen ersten Anlagebolzen pendeln, der sich, in Umfangsrichtung gesehen, beispielsweise auf einer Seite des ersten Rückstellelements entgegen dem Uhrzeigersinn befindet. Demgegenüber kann ein zweites Rückstellelement um einen zweiten Anlagebolzen pendeln, der sich, in Umfangsrichtung gesehen, auf einer Seite des zweiten Rückstellelements im Uhrzeigersinn befindet. Beide Anlagebolzen können in Ruhelage der Drehschwingungsdämpfungsanordnung in unmittelbarem Kontakt zu ihren jeweiligen in Umfangsrichtung wirkenden Rückstellelementen stehen. Ausführungsbeispiele mit Spiel sind jedoch ebenfalls denkbar.

Bei anderen Ausführungsformen können jedem Rückstellelement des Paars zwei in radialer Richtung bewegliche Kraftangriffspunkte zugeordnet werden, wobei sich die zwei Kraftangriffspunkte unter Fliehkrafteinwirkung gegenüberliegend auf unterschiedlichen Seiten des jeweiligen Rückstellelements radial auf und ab bewegen können und wobei die zwei Kraftangriffspunkte bezüglich des jeweiligen Rückstellelements in der Ruhelage asymmetrisch angeordnet sind. Das bedeutet beispielsweise, dass das Rückstellelement auf einer Seite in der Ruhelage in unmittelbarem Kontakt mit einem ersten Kraftangriffspunkt steht, während auf der anderen Seite zwischen dem Rückstellelement und einem zweiten Kraftangriffspunkt in der Ruhelage ein Spiel in Umfangsrichtung (Umfangsspiel) besteht. Die beiden Kraftangriffspunkte befinden sich also in unterschiedlichen Abständen zu dem Rückstellelement, wobei ein Abstand Null, der andere größer als Null ist. Bei solchen Ausführungsbeispielen kann ferner vorgesehen sein, dass die asymmetrische Anordnung von zwei ersten Kraftangriffspunkten bezüglich des ersten Rückstellelements umgekehrt zu der asymmetrischen Anordnung von zwei zweiten Kraftangriffspunkten bezüglich des zweiten Rückstellelements ist. Ein Aufbau des Verstellsystems der Drehschwingungsdämpfungsanordnung mit derartig vorgespannten wechselseitig betätigten Rückstellelementen kann, gegenüber anderen möglichen Ausführungsformen, bei gleicher Anzahl von Rückstellelementen eine ideale (spielfreie) Steifigkeitskennlinie am besten annähern.

Durch asymmetrische Anordnung der beispielsweise mittels Bolzenelementen gebildeten Kraftangriffspunkte im Fliehgewicht in der Art, dass in Nulllage (Ruhelage) eine Auslenkung bzw. Durchbiegung des Rückstellelement erfolgt, oder wahlweise durch asymmetrische Anordnung der Rückstellelemente relativ zum Fliehgewicht bzw. durch asymmetrische Anordnung der Fliehgewichte (Führungsbahn der Fliehgewichte) zu den Rückstellelementen, oder einer Kombination der verschiedenen Möglichkeiten, kann eine gegenseitige Verspannung der Rückstellelemente realisiert und toleranzbedingtes Spiel im System eliminiert werden.

Gemäß einem weiteren Aspekt ist ein Antriebsstrang für ein Fahrzeug vorgesehen, der wenigstens eine Drehschwingungsdämpfungsanordnung gemäß Ausführungsbeispielen der vorliegenden Erfindung umfasst.

Durch Ausführungsbeispiele der vorliegenden Erfindung kann mehr Schwingwinkel und mehr Verstellweg für eine Drehschwingungsdämpfungsanordnung realisiert werden als bei herkömmlichen Drehschwingungsdämpfungsanordnungen. Werden zusätzlich mehrere Fliehgewichte zusammengefasst und jeweils einer Vorspann- bzw. Sensorfeder zugeordnet, können mit einem Fliehgewicht mehrere Rückstellelemente betätigt werden, wodurch die erforderliche Anzahl der Sensorfedern und der Fliehgewichte verringert werden kann. Ein weiterer Vorteil liegt in der Möglichkeit der Gestaltung der Führungsbahnen, an denen sich die Anlagebolzen abstützen. Die Rückstellelemente bzw. Biegefedern sind weiterhin radial, sternförmig um die Drehachse verteilt, ausgerichtet.

Ausführungsbeispiele der vorliegenden Erfindung werden nachfolgend bezugnehmend auf die beiliegenden Figuren näher erläutert. Es zeigen:
- Fig. 1: eine Längsschnittansicht einer herkömmlichen Drehschwingungsdämpfungsanordnung;
- Fig. 2: eine Axialansicht der Drehschwingungsdämpfungsanordnung der Fig. 1 in Blickrichtung II in Fig. 1;
- Fig. 3: eine der Fig. 2 entsprechende Darstellung, wobei eine Trägerscheibe einer ringartig ausgebildeten Auslenkungsmasse weggelassen ist;
- Fig. 4: in ihren Darstellungen a) und b) einen Träger der Drehschwingungsdämpfungsanordnung der Fig. 1 in perspektivischer Ansicht, betrachtet von verschiedenen Seiten;
- Fig. 5: in Ihren Darstellungen a) und b) eine ringartig ausgebildete Auslenkungsmasse im Längsschnitt, geschnitten in verschiedenen Schnittebenen;
- Fig. 6: eine perspektivische Ansicht der ringartig ausgebildeten Auslenkungsmasse;
- Fig. 7: eine Detailansicht einer Auslenkungsmassenpendeleinheit;
- Fig. 8: eine Ansicht eines Abstützelements der Auslenkungsmassenpendeleinheit, betrachtet von radial außen;
- Fig. 9: das Abstützelement der Fig. 8 in perspektivischer Ansicht;
- Fig. 10: das Abstützelement der Fig. 8 in Seitenansicht;
- Fig. 11: das Abstützelement der Fig. 8, geschnitten längs einer Linie XI-XI in Fig. 10;
- Fig. 12: eine Drehschwingungsdämpfungsanordnung mit einer Verlagerung der Fliehgewichte und der Sensorfeder auf Bereiche nicht konzentrisch zur Biegefeder mit radialer Ausrichtung - bei niedriger Drehzahl;
- Fig. 13: die Drehschwingungsdämpfungsanordnung gemäß Fig. 12 bei hoher Drehzahl;
- Fig. 14: eine Drehschwingungsdämpfungsanordnung mit einer Verlagerung der Fliehgewichte und der Sensorfeder auf Bereiche nicht konzentrisch zur Biegefeder mit paarweise paralleler Anordnung und einseitiger Betätigung - bei niedriger Drehzahl;
- Fig. 15: eine Drehschwingungsdämpfungsanordnung mit einer Verlagerung der Fliehgewichte und der Sensorfeder auf Bereiche nicht konzentrisch zur Biegefeder mit paarweise paralleler Anordnung und wechselseitiger Betätigung - bei hoher Drehzahl;
- Fig. 18: eine Drehschwingungsdämpfungsanordnung mit einer Verlagerung der Fliehgewichte und der Sensorfeder auf Bereiche nicht konzentrisch zur Biegefeder mit paralleler Anordnung der Biegefedern zur Führung des zugehörigen Fliehgewichts - bei niedriger und hoher Drehzahl gemischt dargestellt;

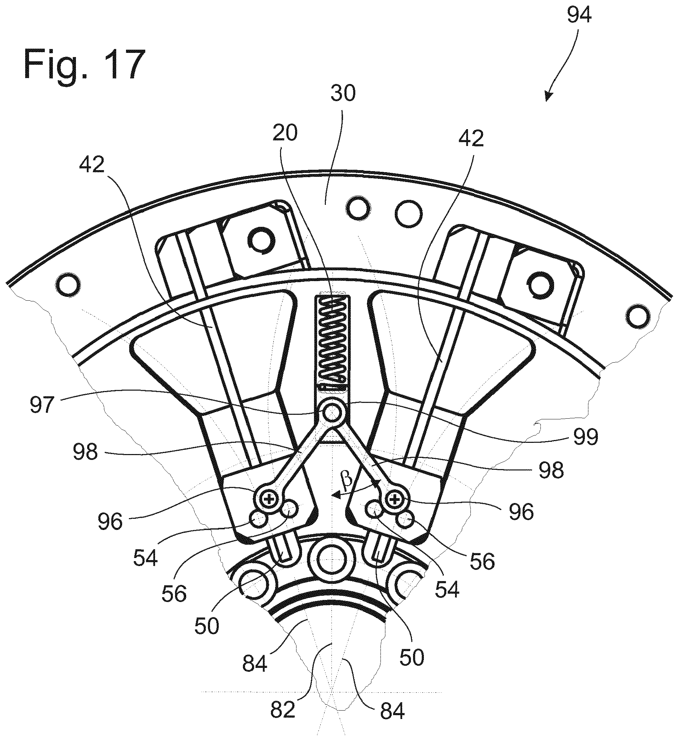

- Fig. 17: eine Drehschwingungsdämpfungsanordnung mit einer Sensormasse mit Gelenkanbindung der Federeinspannung bei niedriger Drehzahl;

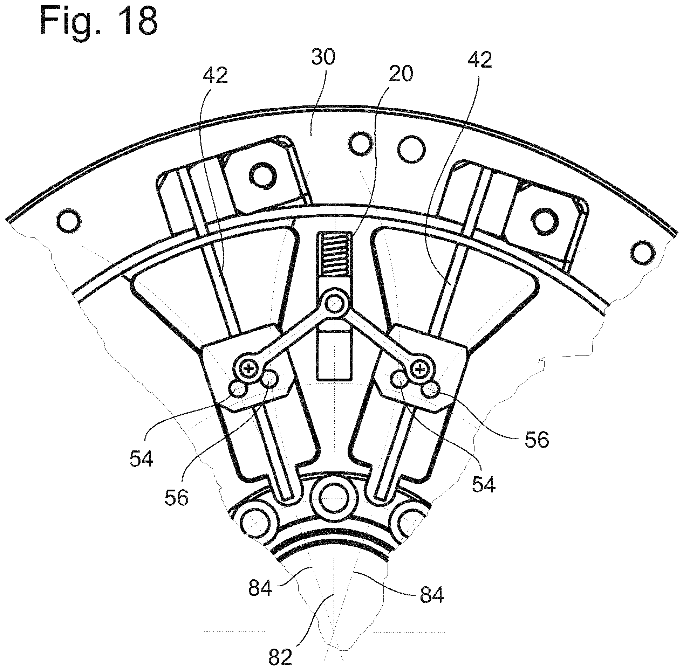

- Fig. 18: eine Sensormasse mit Gelenkanbindung der Federeinspannung bei hoher Drehzahl;

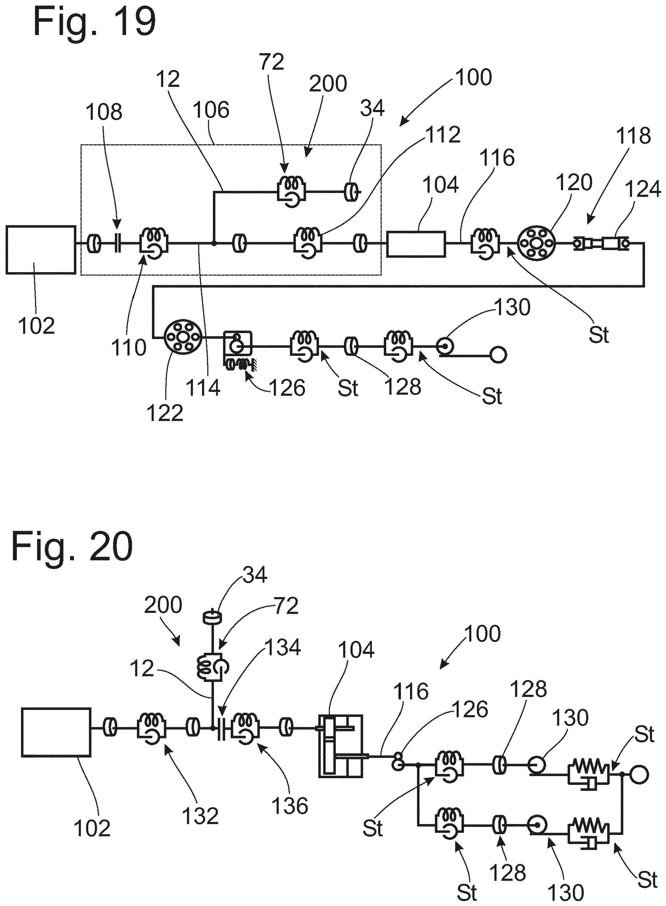

- Fig. 19: in prinzipartiger Darstellung einen Antriebsstrang für ein Fahrzeug mit einer erfindungsgemäß aufgebauten Drehschwingungsdämpfungsanordnung;
- Fig. 20: eine der Fig. 19 entsprechende Darstellung einer alternativen Ausgestaltungsart;

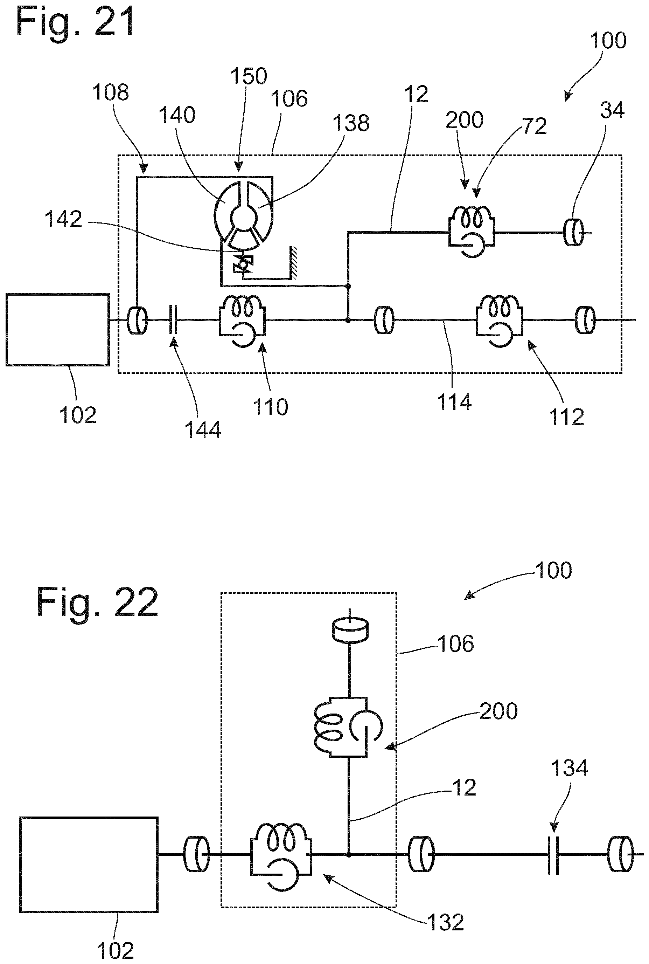

- Fig. 21: eine der Fig. 19 entsprechende Darstellung einer alternativen Ausgestaltungsart;
- Fig. 22: eine der Fig. 19 entsprechenden Darstellung einer alternativen Ausgestaltungsart; und

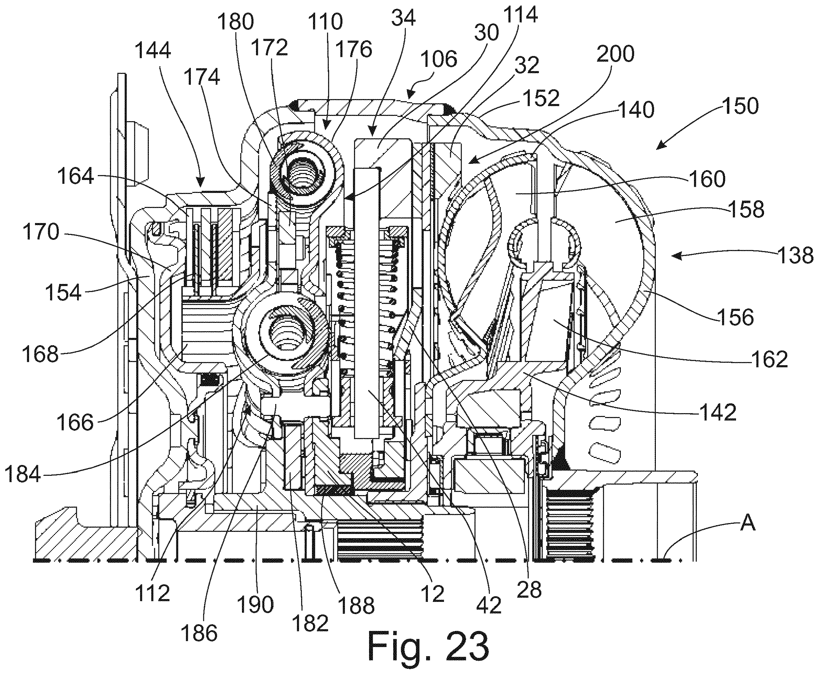

- Fig. 23: eine Teil-Längsschnittansicht eines hydrodynamischen Drehmomentwandlers mit einer darin integrierten Drehschwingungsdämpfungsanordnung mit erfindungsgemäßem Aufbau.

In der nachfolgenden Beschreibung bezeichnen gleiche Bezugszeichen funktional gleiche oder ähnliche Bauelemente bzw. -teile.

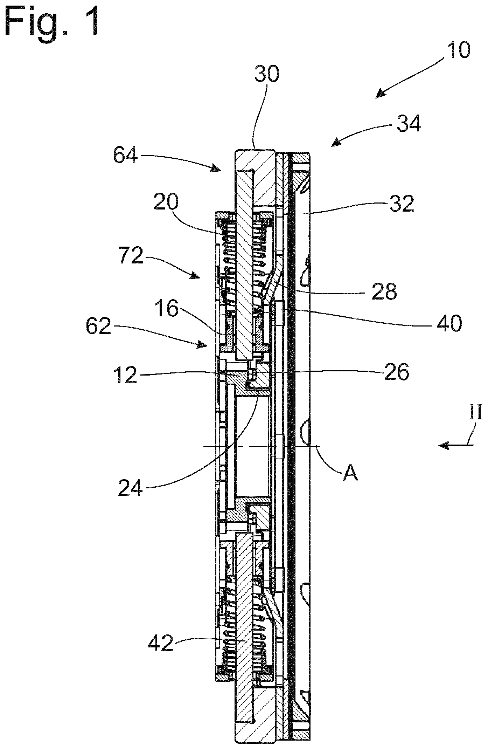

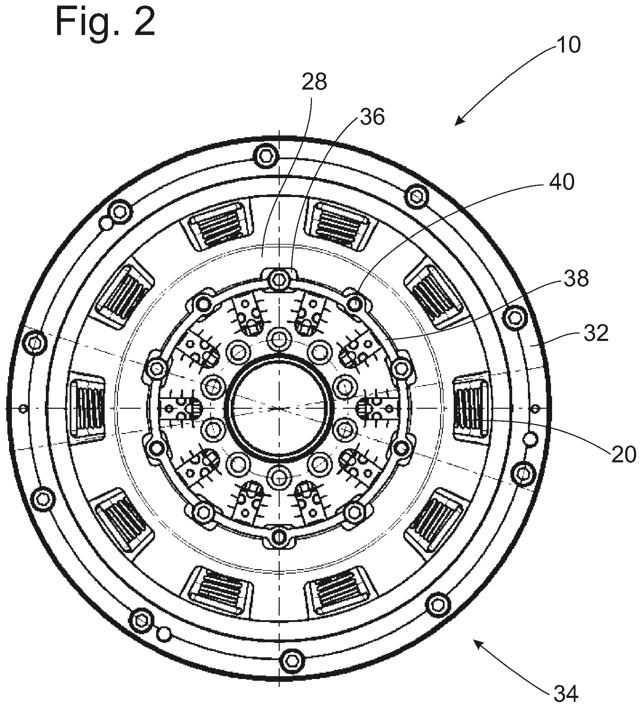

Die Fig. 1 bis 3 zeigen eine allgemein mit 10 bezeichnete herkömmliche Drehschwingungsdämpfungsanordnung, welche zur Erfüllung der Funktionalität eines drehzahladaptiven Tilgers in einen Antriebsstrang eines Fahrzeugs integriert bzw. an diesen angekoppelt werden kann. Anhand der nachfolgenden Beschreibung der herkömmlichen Drehschwingungsdämpfungsanordnung werden die für die anschließende Beschreibung von Ausführungsbeispielen verwendeten Begrifflichkeiten eingeführt.

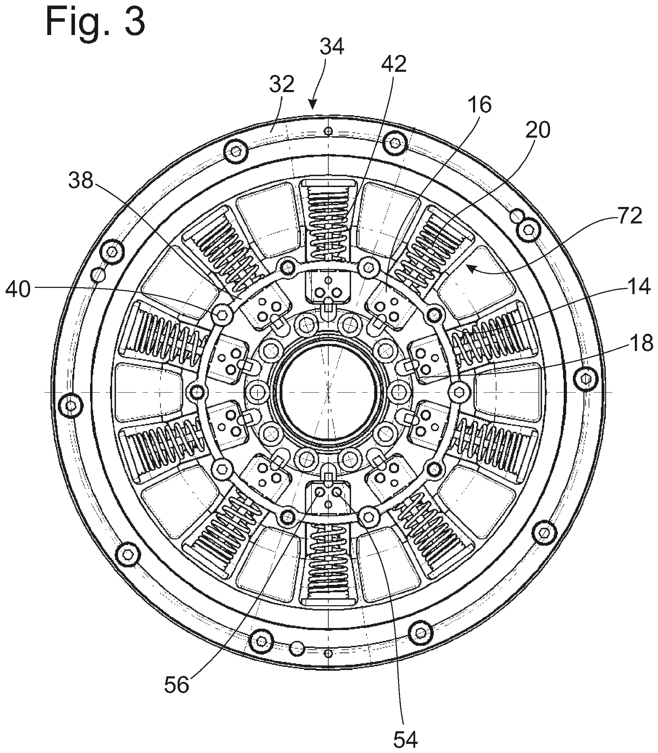

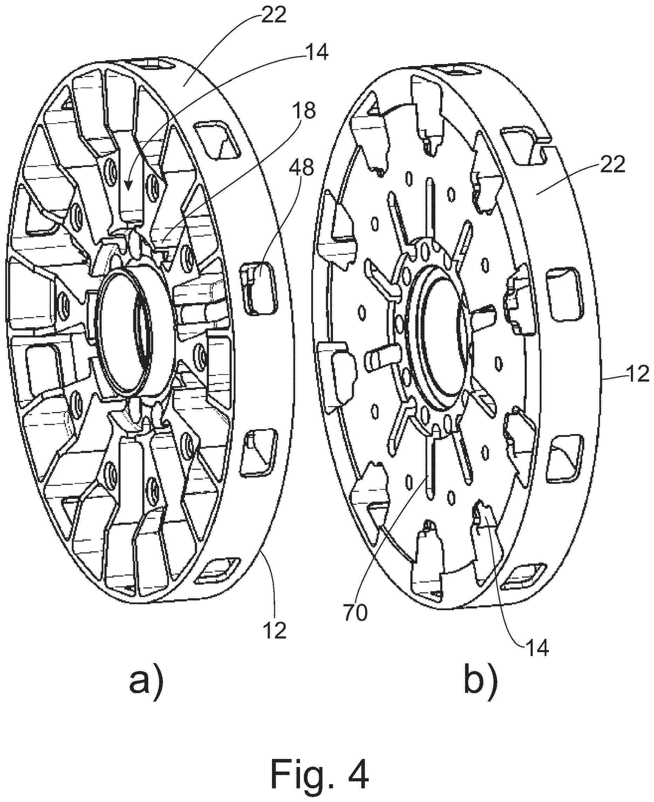

Die herkömmliche Drehschwingungsdämpfungsanordnung 10 umfasst eine durch Verschraubung an einer Antriebsstrangkomponente zur gemeinsamen Drehung damit um eine Drehachse A festzulegende Trägeranordnung 12. In dieser Trägeranordnung bzw. diesem Träger 12 sind in den Darstellungen der Fig. 3 und 4 an mehreren Umfangspositionen vorzugsweise mit näherungsweise gleichmäßigem Umfangsabstand Führungen 14 vorgesehen, in welchen Fliehgewichte 16, die im Nachfolgenden auch als Abstützelemente bezeichnet werden, radial bewegbar aufgenommen sind. Die Führungen 14 sind als sich im Wesentlichen radial erstreckende, langlochartige Aussparungen ausgebildet, welche nach radial innen hin durch Anschläge 18 begrenzt sind, die eine radial innere Basislage der Fliehgewichte 16 definieren. Die Fliehgewichte 16 können beispielsweise durch als Schraubendruckfedern ausgebildete Vorspannfedern 20 nach radial innen zur Anlage an den Anschlägen 18, also in ihrer Basislage, vorgespannt gehalten werden. Dabei können sich die Vorspannfedern 20 an einem radial äußeren ringartigen Randbereich 22 des Trägers 12 abstützen.

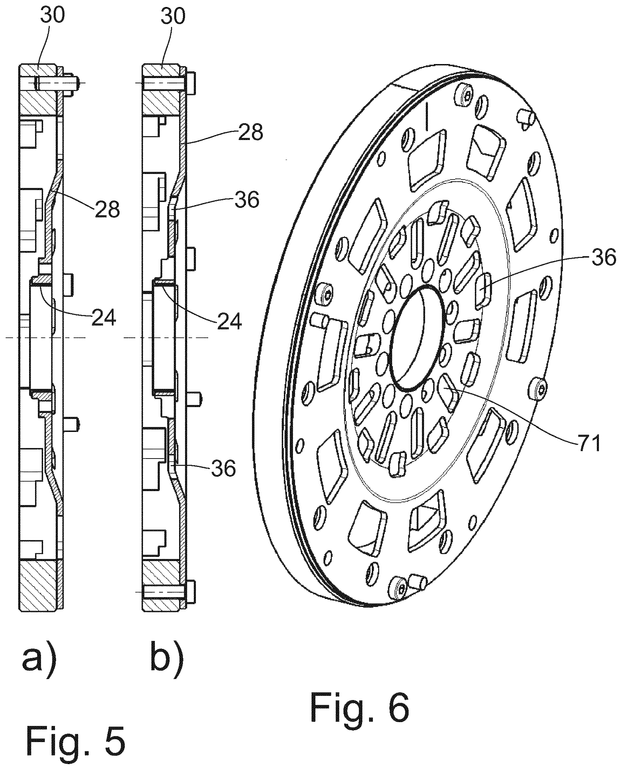

Am Träger 12 kann über ein Radiallager 24 und ein Axiallager 26 eine Trägerscheibe 28 um die Drehachse A bezüglich des Trägers 12 grundsätzlich drehbar getragen werden. In ihrem radial äußeren Bereich kann die Trägerscheibe 28 beispielsweise durch Verschraubung an einer axialen Seite einen Massering 30 tragen. An der anderen axialen Seite der Trägerscheibe 28 kann beispielsweise ein weiterer Massering 32 festgelegt sein. Die Trägerscheibe 28 bildet zusammen mit dem Massering 30 und ggf. auch dem Massering 32 eine allgemein mit 34 bezeichnete Auslenkungs- bzw. Pendelmasse, welche in Umfangsrichtung (d.h. Tangentialrichtung) um die Trägeranordnung 12 pendeln kann, um Drehschwingungen zu dämpfen. Durch eine Mehrzahl von in Fig. 6 auch erkennbaren, in Umfangsrichtung langgestreckte Aussparungen 36 durchgreifenden und einen Axialsicherungsring 38 an der vom Träger 12 abgewandten Seite der Trägerscheibe 28 haltenden Bolzen 40, beispielsweise Schraubbolzen, kann die Trägerscheibe 28 und somit die Auslenkungsmasse 34 axial am Träger 12 gesichert werden. Durch das Umfangsbewegungsspiel der Bolzen 40 in den Aussparungen 36 der Trägerscheibe 28 ist die Auslenkungsmasse 34 in entsprechendem Umfangsbewegungsspiel bezüglich des Trägers 12 um die Drehachse A drehbar, so dass durch Zusammenwirkung der Bolzen 40 mit den Aussparungen 36 eine Relativdrehwinkelbegrenzung bereitgestellt ist.

Die Auslenkungsmassenanordnung 34 ist mit dem Träger 12 durch eine Mehrzahl von in Umfangsrichtung aufeinander folgenden, im Wesentlichen sich radial erstreckenden Federn bzw. Rückstellelementen 42 zur Kraftübertragung gekoppelt. Diese hier beispielhaft als Blattfedern bzw. allgemein als Biegebalken ausgebildeten Rückstellelemente 42 können in ihrem radial äußeren Bereich 44 durch eine jeweilige Klemmanordnung 46 am Massering 30 festgelegt sein. Ausgehend von dieser Festlegung erstrecken sie sich bei herkömmlichen Drehschwingungsdämpfungsanordnungen 10 nach radial innen durch Öffnungen 48 im Randbereich 22 der Trägeranordnung 12 hindurch in eine jeweilige Vorspannfeder 20 zur radialen Vorspannung der Fliehgewichte 16 hinein. Wie man sehen kann, verlaufen bei der herkömmlichen Drehschwingungsdämpfungsanordnung 10 die Hauptachsen von Vorspannfeder 20 und Rückstellelement 42 im Wesentlichen koaxial.

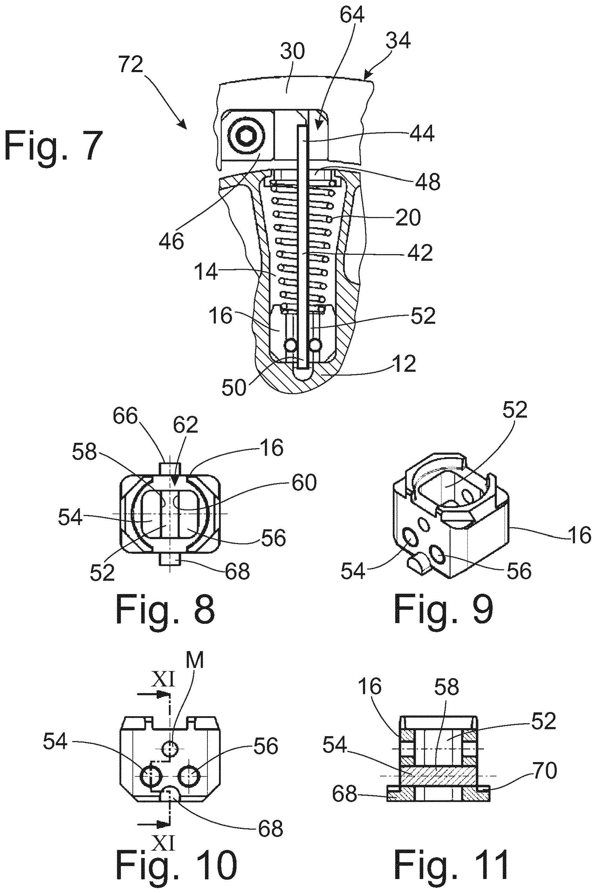

Wie die Fig. 7 dies veranschaulicht, erstreckt sich das bzw. jedes Rückstellelement 42 bei der herkömmlichen Drehschwingungsdämpfungsanordnung 10 mit seinem radial inneren Endbereich 50 in eine zentrale Öffnung 52 eines zugeordneten Fliehgewichts bzw. einer Fliehmasse 16 hinein bzw. durch dieses hindurch. Im Bereich der Öffnung 52 sind am Fliehgewicht 16 in seitlichem Abstand zueinander zwei beispielsweise an Anlagestiften oder -bolzen 54, 56 bereitgestellte Umfangsabstützbereiche 58, 60 vorgesehen, welche radial verschiebbare Kraftangriffspunkte darstellen, um welche sich ein zugeordnetes Rückstellelement 42 bei Auslenkung der Auslenkungsmasse 34 verformen kann. Dabei pendelt die Masse 34 um die Drehachse A. Diese Umfangsabstützbereiche bzw. Kraftangriffspunkte 58, 60, welche in Umfangsrichtung bei manchen Ausführungsbeispielen beidseits des radial inneren Endbereichs 50 des zugeordneten Rückstellelements 42, aber asymmetrisch dazu, liegen können, definieren in ihrer Gesamtheit einen Trägerabstützbereich 62, wohingegen in demjenigen Bereich, in welchem der radial äußere Endbereich 44 des Rückstellelements 42 am Massering 32 bzw. allgemein der Auslenkungsmasse 34 festgelegt ist, ein Auslenkungsmassenabstützbereich 64 gebildet ist.

Bei der vorangehend mit Bezug auf die Fig. 1 bis 11 hinsichtlich ihres konstruktiven Aufbaus erläuterten Drehschwingungsdämpfungsanordnung 10 bildet jeweils ein im Träger 12 radial bewegbar geführtes Fliehgewicht bzw. Abstützelement 16, das mit diesem zusammenwirkende Rückstellelement bzw. die Tilgerfeder 42, die das Fliehgewicht 16 nach radial innen in seine in Fig. 7 erkennbare radiale Basislage (bei Ruhelage der Drehschwingungsdämpfungsanordnung ohne Auslenkung in Umfangsrichtung) vorspannende Vorspannfeder 20 und die Auslenkungsmasse 34 jeweils eine Auslenkungsmassenpendeleinheit 72. Dabei sind in der dargestellten Ausführungsform lediglich beispielshaft insgesamt zehn derartige Auslenkungsmassenpendeleinheiten 72 vorgesehen, wobei der Träger 12 ein gemeinsamer Träger für die Abstützelemente 16 aller Auslenkungsmassenpendeleinheiten 72 ist und die Auslenkungsmasse 34 eine gemeinsame Auslenkungsmasse für alle Auslenkungsmassenpendeleinheiten 72 ist.

Nachdem vorangehend mit Bezug auf die Fig. 1 bis 11 die Funktionsweise der herkömmlichen Drehschwingungsdämpfungsanordnung 10 beschrieben wurde und die hierin verwendeten Begrifflichkeiten eingeführt wurden, werden im Nachfolgenden Ausführungsbeispiele der vorliegenden Erfindung beschrieben, welche den Stand der Technik hinsichtlich Drehschwingungsdämpfungsanordnungen weiterbilden.

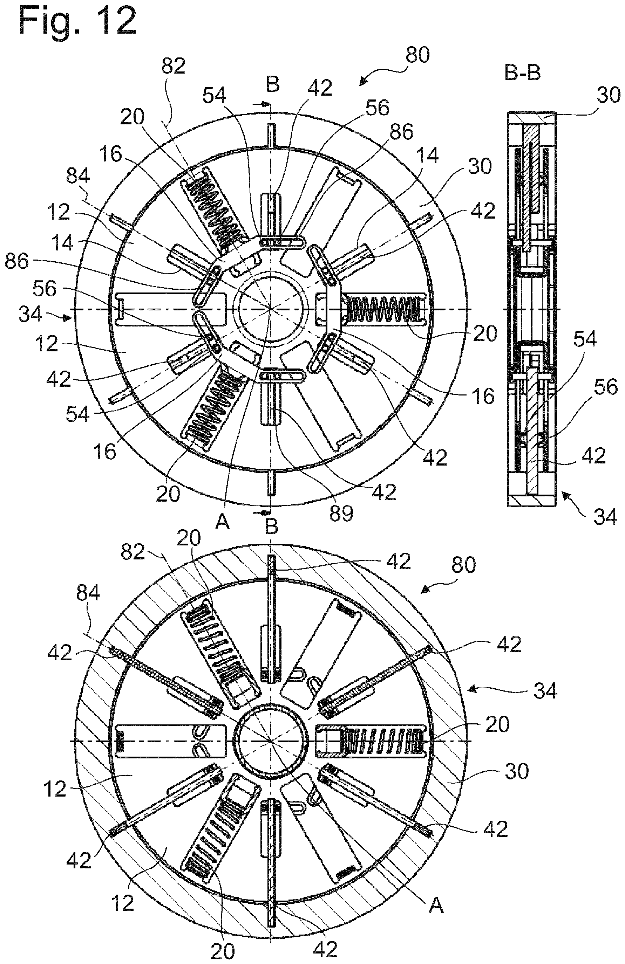

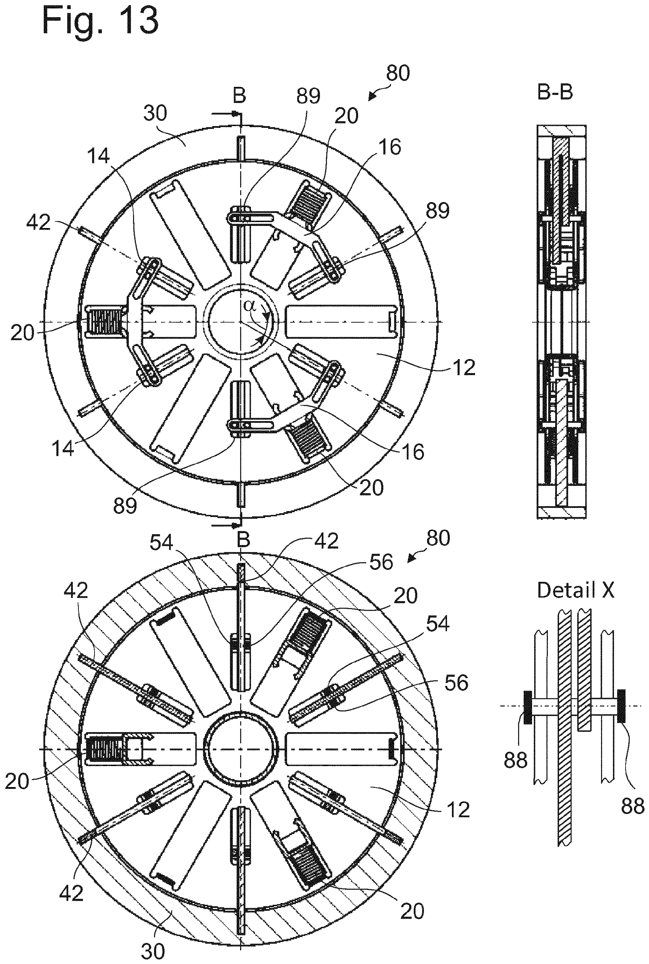

Bei einer Drehschwingungsdämpfungsanordnung 80, welche schematisch in den Fig. 12 und 13 dargestellt ist, sind sich radial von der Auslenkungsmasse 34 in die Trägeranordnung 12 hinein erstreckende Rückstellelemente 42 fest in radialer Richtung in den (Tilger-) Massering 30 eingespannt. Die Rückstellelemente 42 sind auch hier radial, sternförmig um die Drehachse A verteilt, ausgerichtet. Der Tilgermassering 30 ist radial und axial über die Trägeranordnung 12 gelagert, so dass lediglich eine Relativverdrehung in Umfangsrichtung (tangential) möglich ist. Die in Umfangsrichtung wirkenden Rückstellelemente 42 werden bei Verdrehung an Fliehgewichten 16 bzw. an Anlagebolzen 54, 56 abgestützt, die sich wiederum an Führungsbahnen 14 abstützen, die in dem Trägerbauteil 12 integriert sind, und können sich in Umfangsrichtung durchbiegen. Die Fliehgewichte 16 können auf bzw. in den Führungsbahnen 14 in radialer Richtung unter Fliehkrafteinwirkung gegen eine rückstellende Kraft einer zugeordneten Vorspann- bzw. Sensorfeder 20 verstellen und somit den Anlenk- bzw. Pendelpunkt, d.h. den Kraftangriffspunkt, der Rückstellelemente 42 und damit auch die Federsteifigkeit in Abhängigkeit der Drehzahl verändern.

Die Fig. 12 und 13 zeigen also eine Drehschwingungsdämpfungsanordnung 80 gemäß einem Ausführungsbeispiel der vorliegenden Erfindung. Sie umfasst eine um die Drehachse A drehbare Trägeranordnung 12 und eine relativ zu der Trägeranordnung 12 in Umfangsrichtung bewegliche Auslenkungsmasse 34. Die Trägeranordnung 12 und die Auslenkungsmasse 34 sind über eine Mehrzahl in Umfangsrichtung angeordneter und sich von der Auslenkungsmasse 34 in Richtung der Trägeranordnung 12 erstreckender, elastischer Rückstellelemente 42 (wie z.B. Blatt- oder Biegefedern) relativ zueinander verdrehbar gekoppelt. Ein Rückstellelement 42 ist dabei jeweils um wenigstens einen unter Fliehkrafteinwirkung in radialer Richtung beweglichen und dem Rückstellelement 42 zugeordneten Kraftangriffspunkt 54, 56 verformbar. Die radial beweglichen Kraftangriffspunkte 54, 56 sind mittels einer Vorspannfeder 20 mit einer radial in Richtung Drehachse A wirkenden Vorspannkraft beaufschlagt. Im Gegensatz zu der im Vorhergehenden beschriebenen herkömmlichen Drehschwingungsdämpfungsanordnung 10 sind bei der Drehschwingungsdämpfungsanordnung 80 eine Haupt- bzw. Längsachse 82 der Vorspannfeder 20 und eine Haupt- bzw. Längsachse 84 des Rückstellelements 42 nicht koaxial zueinander. Wie sich in der Fig. 12 gut erkennen lässt, sind die sich weitgehend radial erstreckenden Rückstellelemente 42 und die jeweils zugeordnete Vorspannfeder 20 Umfangsrichtung zueinander versetzt angeordnet. In anderen Worten ausgedrückt ist ein Rückstellelement 42 in Umfangsrichtung außerhalb seiner zugeordneten Vorspannfeder 20 angeordnet. Bei dem in der Fig. 12 dargestellten Ausführungsbeispiel verlaufen die Hauptachse 82 der Vorspannfeder 20 und die Hauptachse eines mit der Vorspannfeder 20 in einer Auslenkungsmassenpendeleinheit zusammenwirkenden Rückstellelements 42 schräg zueinander, jeweils in radialer Richtung zur Drehachse A gerichtet und in der Trägeranordnung 12.

Bei dem Ausführungsbeispiel der Fig. 12 und 13 werden die einem Rückstellelement 42 zugeordneten beweglichen Kraftangriffspunkte bzw. die Anlagebolzen 54, 56 jeweils durch ein in radialer Richtung verfahrbares Fliehgewicht 16 geführt, welches vermittels der mit dem Fliehgewicht 16 zusammenwirkenden Vorspannfeder 20 mit einer radial nach innen wirkenden Vorspannkraft beaufschlagt ist, so dass es in Ruhelage, d.h. bei fehlender Auslenkung der Auslenkungsmasse 34, in einer radialen inneren Basislage zur Anlage kommt. Gemäß der Fig. 12 und 13 kann das mit der Vorspannfeder 20 gekoppelte Fliehgewicht 16 auch Führungen 86 für die durch das Fliehgewicht 16 betätigten Anlagebolzen 54, 56 bereitstellen. Die Führungen 86 bzw. deren Führungsschlitze, in denen die Anlagebolzen bzw. Kraftangriffspunkte 54, 56 bei einer radialen Auf- und Ab-Bewegung des Fliehgewichts 16 geführt werden, sind im Wesentlichen senkrecht zu den zugehörigen Hauptachsen 84 der sich radial erstreckenden Rückstellelemente 42 ausgebildet. Allgemein kann die Drehschwingungsdämpfungsanordnung 80 also ausgebildet sein, um einen Kraftangriffspunkt 54, 56 vermittels dem damit zusammenwirkenden Fliehgewicht 16 unter Fliehkrafteinwirkung in einer Führung 86 senkrecht zur Hauptachse 84 des zugeordneten Rückstellelements 42 zu führen, derart, dass bei niedriger Drehzahl (siehe Fig. 12) der Drehschwingungsdämpfungsanordnung 80 der Kraftangriffspunkt 54 und/oder 56 näher zu dem Fliehgewicht 16 oder der Vorspannfeder 20 positioniert ist als bei hoher Drehzahl (siehe Fig. 13).

Während die Fig. 12 die Drehschwingungsdämpfungsanordnung 80 in Vorderansicht (oben links), Rückansicht (unten) und seitlicher Schnittdarstellung (oben rechts) zeigt, stellt die Fig. 13 dieselbe Drehschwingungsdämpfungsanordnung 80 bei hoher Drehzahl, d.h. in nahezu voll ausgelenktem Zustand, dar. Nachdem die Hauptachsen 82 der Vorspannfeder 20 und 84 der beidseitig dazu in Umfangsrichtung angeordneten Rückstellelemente 42 in einem festen Winkel α zueinander verlaufen, wird der Abstand zwischen den Kraftangriffspunkten 54, 56, die bei wachsender Drehzahl entlang der Hauptachse 84 nach radial außen wandern, und dem Fliehgewicht 16 bzw. der Vorspannfeder 20 bei zunehmender Drehzahl immer größer.

Die Fig. 12 zeigt das Verstellsystem bzw. die Drehschwingungsdämpfungsanordnung 80 bei niedriger Drehzahl in unverstelltem Zustand, d.h., die Fliehgewichte 16 befinden sich in radial innen gelegener Basislage. Durch die Verlagerung einer Vorspann- bzw. Sensorfeder 20 in einen Bereich nicht konzentrisch zu einer der Sensorfeder 20 zugeordneten Blattfeder als Rückstellelement 42 besteht keine Gefahr der Kollision zwischen Sensorfeder 20 und Blattfeder 42. Dadurch kann mehr Schwingwinkel und mehr Verstellweg realisiert werden als bei herkömmlichen Drehschwingungsdämpfungsanordnungen.

Werden zusätzlich gegenüber herkömmlichen Ansätzen mehrere Fliehgewichte 16 zusammengefasst und jeweils einer Sensorfeder 20 zugeordnet, können, wie die Fig. 12 darstellt, mit einem Fliehgewicht 16 und einer Vorspannfeder 20 mehrere Rückstellelemente 42 gleichzeitig betätigt werden, wodurch eine erforderliche Anzahl der Vorspann- bzw. Sensorfedern 20 und der Fliehgewichte 16 verringert werden kann. Das bedeutet, die Fig. 12 zeigt eine Ausführungsform, bei der einer Vorspannfeder 20 eine Mehrzahl von zu der Vorspannfeder 20 nicht koaxial verlaufenden Rückstellelementen 42 zugeordnet ist, so dass die Kraftangriffspunkte 54, 56 der zugeordneten Rückstellelemente 42 vermittels der Vorspannfeder 20 gemeinsam unter Fliehkrafteinwirkung in radialer Richtung bewegt werden können. In der Fig. 12 sind die einer Vorspannfeder 20 zugeordneten beiden Rückstellelemente 42 jeweils außerhalb der Vorspannfeder 20 und in Umfangsrichtung zu beiden Seiten der Vorspannfeder 20 angeordnet. D.h., eine Auslenkungsmassenpendeleinheit umfasst hier eine Vorspannfeder 20 und zwei Rückstellelemente 42. Auslenkungsmassenpendeleinheiten mit einer Vorspannfeder 20 und lediglich einem Rückstellelement wären allerdings ebenfalls denkbar. Ein weiterer Vorteil der in Fig. 12 und dargestellten Ausführungsform liegt in der Möglichkeit der Gestaltung der Führungsbahnen 14, an denen sich die Anlagebolzen 54, 56 abstützen.

Die Fig. 13 zeigt das gleiche System wie die Fig. 12, allerdings bei höherer Drehzahl verstelltem Zustand. Die Anlagebolzen 54, 56 werden vermittels der Fliehgewichte 16 bzw. deren Führungsflügel 86 radial entlang eines Rückstellelements 42 geführt und können sich gleichzeitig senkrecht zur Achse 84 in Umfangsrichtung bewegen (in dem Schlitz der Führung 86). Eine Begrenzung der Anlagebolzen 54, 56 in Umfangsrichtung wird in eine Richtung durch die Kontur einer Führung 14 und in der anderen Richtung durch die Blattfeder bzw. das Rückstellelement 42 bestimmt. Axial können die Anlagebolzen 54, 56 vorzugsweise durch Formschluss (z.B. Sicherungsringe oder Verstemmung der Enden, siehe Bezugszeichen 88) gesichert werden. Ein Ende der Bolzenführungskontur 14 in radialer Richtung außen kann zusätzlich als Anschlag bzw. Wegbegrenzung 89 für die Fliehgewichte 16 zum Schutz der Sensorfeder 20 genutzt werden.

Aus einem Vergleich der Darstellungen der Fig. 12 und 13 lässt sich gut erkennen, dass eine Relativlage zwischen einem Kraftangriffspunkt 54 bzw. 56 und dem Schwerpunkt eines damit zusammenwirkenden Fliehgewichts 16 bzw. der Sensorfeder 20 unter Fliehkrafteinwirkung also variabel sein kann.

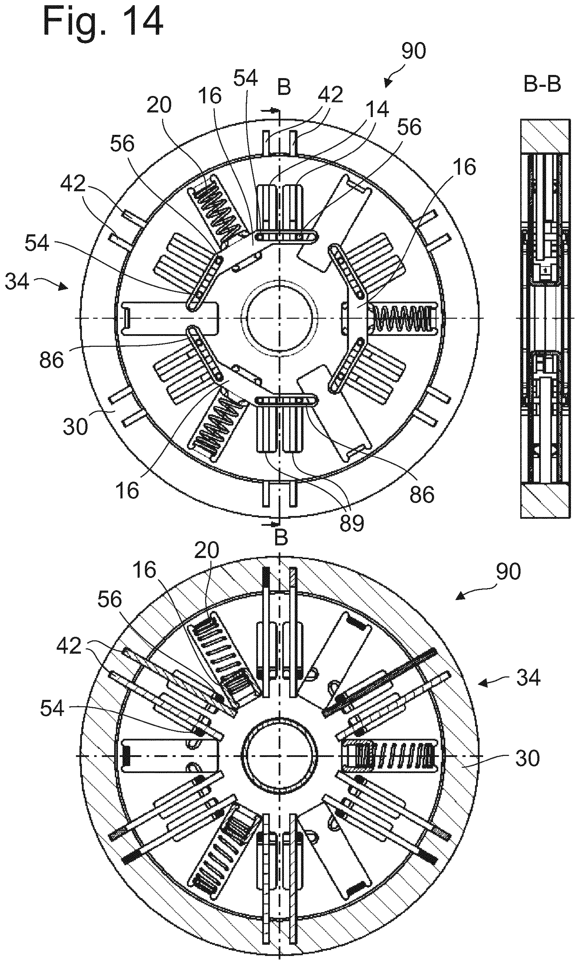

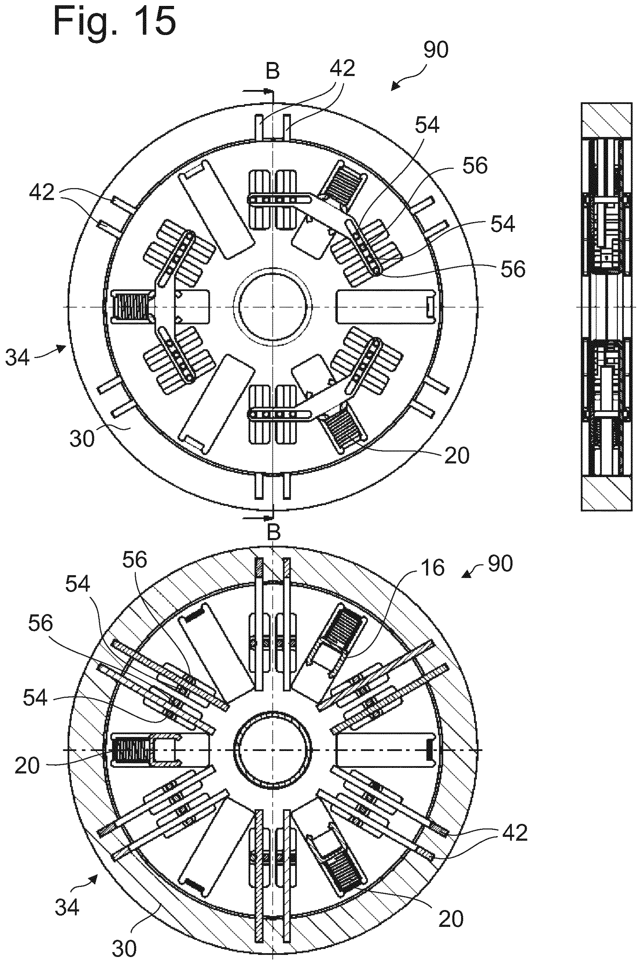

Die Fig. 14 und 15 zeigen eine weitere Ausführungsform einer Drehschwingungsdämpfungsanordnung 90 gemäß der vorliegenden Erfindung, bei der Fliehgewichte 16 und die Sensorfeder 20 auf Bereiche nicht konzentrisch bzw. koaxial zu einem Rückstellelement 42 verlagert sind. Hier sind die Rückstellelemente 42 paarweise parallel angeordnet (d.h. parallele Hauptachsen 84) und werden jeweils einseitig betätigt. Dabei bedeutet eine einseitige Betätigung einen Abstütz- bzw. Kraftangriffspunkt in nur einer Umfangsrichtung - im Gegensatz zur der in den Fig. 12 und 13 dargestellten wechselseitigen Betätigung mit Kraftangriffspunkten für jedes Rückstellelement 42 auf beiden Seiten in Umfangsrichtung.

Der grundsätzliche Aufbau der Drehschwingungsdämpfungsanordnung 90 entspricht dem vorangehend Beschriebenen, so dass auf die diesbezüglichen Ausführungen verwiesen werden kann. Das Ausführungsbeispiel der Fig. 14 und 15 unterscheidet sich von Fig. 12 und 13 insbesondere dadurch, dass hier einer Vorspannfeder 20 nicht nur zwei Rückstellelemente 42 (ein erstes links bzw. entgegen dem Uhrzeigersinn und ein zweites rechts bzw. im Uhrzeigersinn der Vorspannfeder 20) zugeordnet sind, sondern dass hier einer Vorspannfeder 20 jeweils vier Rückstellelemente 42 (zwei links und zwei rechts der Vorspannfeder 20) zugeordnet sind. D.h., eine Auslenkungsmassenpendeleinheit umfasst hier eine Vorspannfeder 20 und zwei Rückstellelementpaare (vier Rückstellelemente). Hiermit wird die Flexibilität des erfindungsgemäßen Konzepts dargestellt.

Man erkennt allerdings in der Fig. 14, welche die Drehschwingungsdämpfungsanordnung 90 jeweils bei unterschiedlichen Drehzahlen darstellt, dass bei den dort gezeigten Abstützelementen für ein Rückstellelement 42 jeweils nur ein Stift/Bolzen 54 oder 56 vorgesehen und dementsprechend jeweils auch nur ein Kraftangriffs- oder Pendelpunkt vorgesehen sein kann (--> Asymmetrie). Ein einzelnes Rückstellelement 42 kann sich somit nur in einer Umfangsrichtung am Kraftangriffspunkt 54 oder 56 abstützen.

Wie es die Fig. 14 zeigt, kann der Gesamtaufbau derart sein, dass bei den in Umfangsrichtung aufeinanderfolgenden Rückstellelementen 42 eines Rückstellelementepaars abwechselnd einmal ein Stift 54 vorhanden ist, zum Bereitstellen eines Kraftangriffspunkts in einer ersten Umfangsrichtung, und bei dem darauffolgenden Rückstellelement 42 des Paars ein Stift 56 vorgesehen ist, um dort einen Kraftangriffspunkt in einer zweiten, entgegengesetzten Umfangsrichtung, d.h. auf der anderen Seite des Rückstellelements 42, realisieren zu können. Dies hat zur Folge, dass bei jeder Halbschwingung jeweils nur die Hälfte der Rückstellelemente 42 wirksam ist. Aufgrund der doppelten Anzahl der Rückstellelemente 42 im Vergleich zu den Fig. 12 und 13 bleibt die hier Gesamtsteifigkeit der Drehschwingungsdämpfungsanordnung 90 jedoch im Wesentlichen gleich.

Gemäß manchen Ausführungsbeispielen kann bei einem Rückstellelementepaar ein erstes Rückstellelement 42 (z.B. links) in Ruhelage der Drehschwingungsdämpfungsanordnung 90 (bzw. beim Nulldurchgang des Tilgerausschlags) in einer ersten Richtung vorgespannt und ein zweites Rückstellelement 42 (z.B. rechts) in der Ruhelage in einer zweiten, der ersten Richtung entgegengesetzten Richtung vorgespannt sein. Dabei können die unterschiedlichen Vorspannungen bzw. Durchbiegungen der beiden Rückstellelemente 42 des Paars vorzugsweise derart gewählt sein, dass sich durch die entgegengesetzten Vorspannungen ergebende entgegengesetzte Vorspannungskräfte in der Ruhelage bzw. dem Nulldurchgang betragsmäßig gleich sind. Dabei kann das erste Rückstellelement bzw. die erste Biegefeder 42 (links) des Paars in Ruhelage der Drehschwingungsdämpfungsanordnung 90 in der ersten Richtung durch unmittelbaren Kontakt zu einem dem ersten Rückstellelement 42 zugeordneten Kraftangriffspunkt am Bolzen 54 vorgespannt sein. Das zweite Rückstellelement 42 (rechts) des Paars kann in der Ruhelage (d.h. keine Auslenkung) in der zweiten Richtung durch unmittelbaren Kontakt zu einem dem zweiten Rückstellelement 42 zugeordneten Kraftangriffspunkt am Bolzen 56 vorgespannt sein. In anderen Worten ausgedrückt können die beiden unmittelbar benachbarten Rückstellelemente 42, die ein zusammengehöriges Paar von Rückstellelementen bilden, auch in der Ruhelage an ihren jeweiligen Kraftangriffspunkten bzw. Bolzen 54, 56 unmittelbar anliegen, wobei auch Ausführungsbeispiele mit Umfangsspiel zwischen Anlagepunkt und Rückstellelement denkbar sind. Durch die asymmetrische Anlage kann sich gemäß Ausführungsbeispielen in der Ruhelage der Drehschwingungsdämpfungsanordnung 90 eine jeweilige Vorspannung bzw. Durchbiegung der Rückstellelemente 42 in einem Bereich von 1% bis 10% einer maximalen Durchbiegung eines Rückstellelements 42, wie z.B. einer Blattfeder, ergeben. Durch die Vorspannung kann eine möglichst konstante Tilgersteifigkeit mit möglichst linearem und streng monotonem Kennlinienverlauf für eine jeweilige Drehzahl erreicht werden.

Die in der Fig. 14 dargestellte Ausführungsform zeigt ein entlang dem ersten Rückstellelement 42 (links bzw. entgegen dem Uhrzeigersinn) eines Paars in radialer Richtung verfahrbaren ersten Kraftangriffspunkt 54 und einen entlang dem zweiten Rückstellelement 42 (rechts bzw. im Uhrzeigersinn) des Paars in radialer Richtung verfahrbaren zweiten Kraftangriffspunkt 56. Die Kraftangriffspunkte 54, 56 können in der Ruhelage mit dem ersten und dem zweiten Rückstellelement 42 auf jeweils unterschiedlichen Seiten, nämlich einmal links bzw. entgegen dem Uhrzeigersinn und rechts bzw. im Uhrzeigersinn, des Rückstellelements 42 in unmittelbaren Druckkontakt stehen, um das Paar Rückstellelemente 42 in der Ruhelage der Drehschwingungsdämpfungsanordnung 90 in entgegengesetzten Richtungen vorzuspannen. Bei dem Ausführungsbeispiel der Fig. 14 ist jedem der beiden Rückstellelemente 42 genau ein in radialer Richtung beweglicher Kraftangriffspunkt zugeordnet, 54 (links) und 56 (rechts). Dabei können die jeweiligen Kraftangriffspunkte 54, 56 des ersten und des zweiten Rückstellelements 42 auf jeweils unterschiedlichen Seiten der Rückstellelemente 42 angeordnet werden, um die entgegengesetzten Vorspannungen zu erhalten.

Bei weiteren, wechselseitig angesteuerten, Ausführungsformen, bei der jedem Rückstellelement 42 einer Drehschwingungsanordnung jeweils zwei in radialer Richtung bewegliche - jedoch asymmetrisch um das Rückstellelement 42 angeordnete - Kraftangriffspunkte 54, 56 zugeordnet sein können (siehe z.B. Fig. 15), kann die entgegengesetzte Vorspannung in der Ruhelage durch unmittelbaren Kontakt des Rückstellelements 42 zu einem seiner zwei zugeordneten Kraftangriffspunkte 54, 56 erreicht werden. Bei solchen Ausführungsbeispielen bewegen sich die beiden asymmetrischen Kraftangriffspunkte 54, 56 unter Fliehkrafteinwirkung gegenüberliegend auf unterschiedlichen Seiten (links, rechts) des jeweiligen Rückstellelements 42 radial nach außen bzw. innen.

Im Unterschied zu den im Vorhergehenden beschrieben wechselseitig angesteuerten Drehschwingungsanordnungen 10 oder 80 können die beiden zwei Kraftangriffspunkte 54, 56 dann aber bezüglich ihres jeweiligen Rückstellelements 42 in der Ruhelage (d.h. keine Auslenkung der Auslenkungsmasse 34) asymmetrisch angeordnet sein, um die entgegengesetzten Vorspannungen zu erhalten. In anderen Worten ausgedrückt kann bei einer linken Auslenkungsmassenpendeleinheit eines Paars von Auslenkungsmassenpendeleinheiten das Rückstellelement 42 in der Ruhelage in unmittelbaren Kontakt zu dem linken Bolzen 54 stehen. Zwischen dem linken Rückstellelement 42 und dem zugeordneten rechten Bolzen 56 kann hingegen Umfangsspiel herrschen. Bei der rechten Auslenkungsmassenpendeleinheit kann es sich genau umgekehrt verhalten, d.h., das rechte Rückstellelement 42 kann in Ruhelage in unmittelbaren Kontakt zu dem zugeordneten rechten Bolzen 56 stehen. Zwischen dem rechten Rückstellelement 42 und seinem linken Anlagebolzen 54 kann Umfangsspiel herrschen.

Zusammenfassend sind sämtliche beschriebenen wechselseitig vorgespannten Ausführungsbeispiele dadurch gekennzeichnet, dass die Lage wenigstens eines beweglichen Kraftangriffspunkts 54, 56 bezüglich des damit zusammenwirkenden Rückstellelements 42 in der Ruhelage bzw. im Nulldurchgang der Drehschwingungsdämpfungsanordnung asymmetrisch ist. D.h., das radial verlaufende Rückstellelement 42, wie z.B. eine Blattfeder, kann nicht als Symmetrieachse der Kraftangriffspunkte 54, 56 betrachtet werden. Dabei kann die Asymmetrie durch eine asymmetrische Anordnung der Bolzenelemente 54, 56 in den Führungen 14 erreicht werden, in der Art, dass in Nulllage eine Auslenkung der Rückstellelemente 42 erfolgt. Alternativ können die Rückstellelemente 42 asymmetrisch den Führungen 14 bzw. die Führungen 14 asymmetrisch zu den Rückstellelementen 42 platziert werden. Ebenso kann durch eine Kombination der verschiedenen Möglichkeiten eine gegenseitige Verspannung der Rückstellelemente 42 realisiert und toleranzbedingtes Spiel im System eliminiert werden.

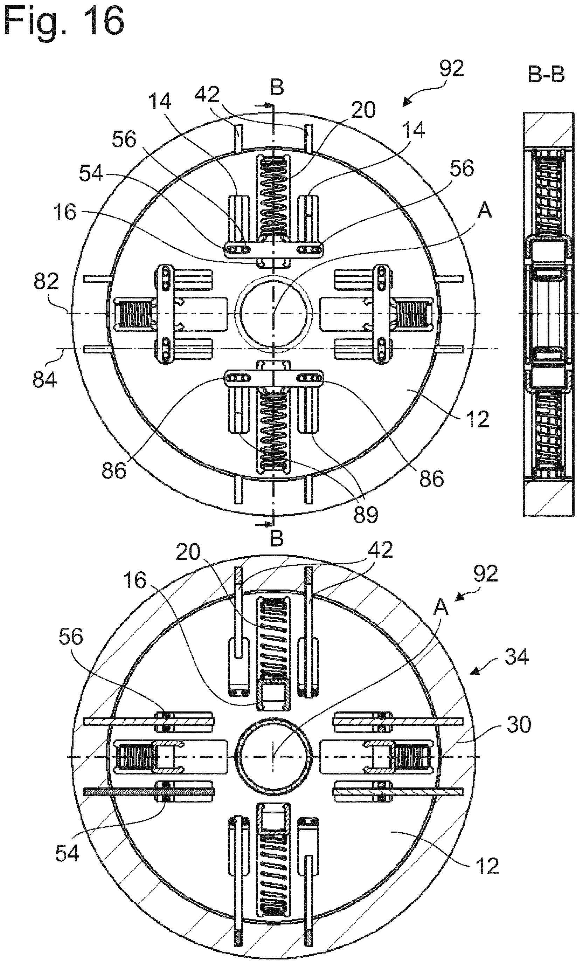

Die Fig. 16 zeigt eine weitere beidseitig betätigte Drehschwingungsdämpfungsanordnung 92 (mit oder ohne Umfangsspiel in Ruhelage), welche ähnlich aufgebaut ist, wie die Drehschwingungsdämpfungsanordnung 80 der Figuren 12 und 13.

Obwohl auch bei diesem Ausführungsbeispiel die Hauptachsen 82 der Vorspannfeder 20 und die Hauptachsen der Rückstellelemente 42 nicht koaxial verlaufen, so ist dieses Ausführungsbeispiel dadurch gekennzeichnet, dass eine Hauptachse 82 einer Vorspannfeder 20 und eine Hauptachse 84 eines dazu korrespondierenden Rückstellelements 42 im Wesentlichen parallel zueinander verlaufen, d.h., einen Winkel von in Wesentlichen 0° einschließen. Vorteilhaft bei dieser Variante ist die einfachere und materialsparende Ausführung des Fliehgewichts 16 und dessen Führungen 86. Im Gegensatz zur der Drehschwingungsdämpfungsanordnung 80 brauchen hier die Führungen 86 keine Bewegung der Anlagebolzen 54, 56 in Richtung senkrecht zur Hauptachse 82 der Vorspannfeder zuzulassen. Bei der parallelen Anordnung der Fig. 16 bewegen sich Fliehgewicht 16 und Anlagebolzen 54, 56 unter Fliehkrafteinwirkung lediglich parallel zur Hauptachse 82 der Vorspannfeder 20 bzw. parallel zur Hauptachse 84 eines der Vorspannfeder 20 zugeordneten Rückstellelements 42.

Durch die zur Drehachse A versetzte Anordnung der Rückstellelemente bzw. Biegefedern 42 findet bei Auslenkung zusätzlich eine Relativbewegung eines Rückstellelement 42 in radialer Richtung zum Anlagebolzen 54, 56 statt, welche über die Anlagebolzen 54, 56 auf das jeweilige Fliehgewicht 16 übertragen werden kann. Diese Relativbewegung kann Kippeffekte hervorrufen, die wiederum zu einer gewissen Hysterese in der Federkernlinie des Tilgers 92 führen können. Dieser Effekt wird umso größer, je größer der Versatz der Hauptachsen 84 der Rückstellelemente 42 zur Drehachse A wird. Im Übrigen kann auch die Ausführungsform gemäß der Fig. 14 und 15 diesen Effekt aufweisen.

Die Fig. 17 und 18 zeigen eine weitere Ausführungsform einer Drehschwingungsdämpfungsanordnung 94 gemäß der vorliegenden Erfindung.

Bei der in den Fig. 17 und 18 in vergrößerter Darstellung gezeigten Drehschwingungsdämpfungsanordnung 94 ist ein unter Fliehkrafteinwirkung entlang der Hauptachse 84 eines Rückstellelements 42 geführtes Fliehgewicht 16, welches wenigstens einen Kraftangriffspunkt 54, 56 für das Rückstellelement 42 umfasst, mit der Vorspannfeder 20 über wenigstens ein Gelenk 96, 97 gekoppelt, so dass ein Winkel β zwischen der Hauptachse 82 der Vorspannfeder 20 und dem Fliehgewicht 16 unter Fliehkrafteinwirkung variabel ist. Dabei kann der Winkel β durch die Hauptachse 82 der Vorspannfeder 20 und einer Längsachse einer Pendelstütze 98 definiert werden, welche einen Gleitstein bzw. ein Fliehgewicht 16 mit der Vorspannfeder 20 bzw. einer damit verbundenen Sensormasse 99 koppelt.

Wie es in den Fig. 17 und 18 dargestellt ist, kann die Vorspannfeder 20 mit zwei dazu links- und rechtsseitigen Rückstellelementen 42 über Fliehgewichte bzw. Gleitsteine 16 gekoppelt sein, welche jeweils Kraftangriffspunkte 54 und 56 für die Rückstellelemente 42 aufweisen. Die Gleitsteine 16 sind wiederum mit der Vorspannfeder 20 über an den Gleitsteinen 16 und der Vorspannfeder befindliche Gelenke 96 bzw. 97 gekoppelt. Das Gelenk 97 an der Sensor- bzw. Vorspannfeder 20 wird durch zwei Pendelarme bzw. -stützen 98 gebildet, von denen jeweils eine von dem Gelenk 97 zu einem Gelenk 96 am links- oder rechtsseitigen Fliehgewicht 16 führt. Bei variabler Drehzahl bzw. variierender radialer Auslenkung der Fliehgewichte 16 entlang der Rückstellelemente 42 verändert sich der Winkel 2β zwischen den Pendelstützen 98. Während der Winkel 2β in der radialen Basislage (siehe Fig. 17) der Fliehgewichte 16 betragsmäßig verhältnismäßig klein ist, wird der Winkel 2β zwischen den Pendelstützen 98 bei radialer Auslenkung der Fliehgewichte nach außen betragsmäßig immer größer (siehe Fig. 18).

Ein Gelenk 96 eines Fliehgewichts 16 kann sich gemäß Ausführungsbeispielen beispielsweise im Schwerpunkt des Fliehgewichts 16 befinden, so dass der Gleitstein bzw. das Fliehgewicht 16 in seiner Führung 14 bei Einleitung einer Stellkraft nicht verkippen bzw. verklemmen kann, was eine hohe Sicherheit ermöglicht. An dem Gelenk 96 kann die Pendelstütze 98 angebunden sein, die an ihrem anderen Ende vermittels eines Gelenks 97 mit der Sensormasse 99 der Sensorfeder 20 verbunden ist. Die Sensormasse 99 wird durch die Sensorfeder 20 radial nach innen gezwungen. Auch das Gelenk 97 sitzt vorzugsweise im Schwerpunkt der Sensormasse 99, um deren Verkippen zu vermeiden.

Mit der bezüglich der Hauptachse 82 der Sensorfeder 20 achsensymmetrischen Anordnung gemäß den Fig.17 und 18 können zwei Rückstellelemente 42 von einer Drehzahlsensoreinrichtung 20, 97, 98, 99 bzw. einer Vorspannfeder 20 angesteuert werden. Dadurch ist ein sehr großer Schwingbereich der Tilgermasse 30 bzw. der Tilgerfedern als Rückstellelemente 42 möglich.

Eine Abstimmung der Drehzahlcharakteristik und damit der Tilgerordnung kann über die Massen der Fliehgewichte 16, die Sensormasse 99, der Sensorfeder 20 sowie die Geometrie der Pendelstützen 98 erfolgen.

Die Fig. 18 zeigt die Drehschwingungsdämpfungsanordnung 94 bei hoher Drehzahl, bei der die Sensormasse 99 entgegen der Vorspannkraft der Sensorfeder 20 radial nach außen verschoben ist. Somit ist sind die Blattfedern 42 aufgrund der kürzeren Biegelänge steifer als in der Stellung der Fig. 17.

Je nach Abstimmung können die Fliehgewichte 16 aus einem sehr leichten Material, wie z. B. einem reibungsoptimierten Kunststoff, gewählt werden, da die Funktion der verschleißarmen bzw. -freien Anlage der Blattfedern bzw. Rückstellelemente 42 über die eingesteckten (Stahl-) Bolzen 56 und 54 übernommen wird. Als Sensormasse steht die Masse 99 zur Verfügung. Durch die zunehmende Strecklage der Pendelstützen 98 bei hoher Drehzahl wird die auf die Fliehgewichte 16 wirkende Kraft der Sensorfeder 20 kleiner, so dass auch eine über die Drehzahlzunahme degressiv verlaufende Steifigkeitszunahme der Rückstellelemente 42 ermöglicht wird. Damit kann bei hoher Drehzahl eine abnehmende Tilgerordnung erzeugt werden, was z. B. zum Schutz des Tilgers vorteilhaft sein kann. Je nach Geometrie der Drehzahlsensoreinrichtung 20, 97, 98, 99 können gemäß anderen Ausführungsbeispielen durchaus auch über die Drehzahlzunahme progressiv verlaufende Steifigkeitszunahmen der Rückstellelemente 42 ermöglicht werden.

Nachfolgend werden mit Bezug auf die Fig. 19 bis 23 verschiedene Einsatzmöglichkeiten der vorangehend beschriebenen Drehschwingungsdämpfungsanordnungen erläutert.

In Fig. 19 umfasst ein Antriebsstrang 100 ein beispielsweise als Brennkraftmaschine ausgebildetes Antriebsaggregat 102. Im Drehmomentenfluss zwischen dem Antriebsaggregat 102 und einem Getriebe 104, beispielsweise Automatikgetriebe, ist in einem rotierenden Nassraum 106 eines allgemein mit 108 bezeichneten Anfahrelements eine Drehschwingungsdämpfungsanordnung 200 gemäß einem Ausführungsbeispiel angeordnet. Diese umfasst die durch die Auslenkungsmassenpendelanordnungen 72 mit der Auslenkungsmasse 34 bereitgestellte Steifigkeit und ist mit dem Träger 12 an eine rotierende Komponente des Antriebsstrangs 100 angekoppelt. Dabei können in dem rotierenden Nassraum 106 zwei seriell wirksame Drehschwingungsdämpfer 110, 112 vorgesehen sein, jeweils mit einer Primärseite und einer Sekundärseite sowie dazwischen wirkenden Dämpferfedern, über welche das zwischen dem Antriebsaggregat 102 und dem Getriebe 104 übertragene Drehmoment geleitet wird. Im dargestellten Ausgestaltungsbeispiel ist eine Sekundärseite des Drehschwingungsdämpfers 110 mit einer Primärseite des Drehschwingungsdämpfers 112 zum Bereitstellen einer Zwischenmasse bzw. eines Zwischenelements 114 gekoppelt, an welches der Träger 12 angebunden ist. Im Drehmomentenfluss auf das Getriebe 104 bzw. eine Getriebeausgangswelle 116 folgt eine allgemein mit 118 bezeichnete Kardanwellenanordnung mit jeweiligen Gelenkscheiben 120, 122 und einer dazwischen liegenden Kardanwelle 124. Abtriebsseitig ist die Kardanwelle 124 an ein Achsgetriebe bzw. Differential 126 angekoppelt. Von diesem wird das Drehmoment auf Felgen 128 bzw. Reifen 130 übertragen. In Zuordnung zu verschiedenen Übertragungswellen, wie z. B. der Getriebeausgangswelle 116 einer Übertragungswelle zwischen dem Differential und den Felgen 128 bzw. auch den Felgen 128 bzw. den Reifen 130 sind aufgrund deren Eigenelastizität jeweilige Steifigkeiten veranschaulicht.

Während in Fig. 19 ein in Fahrtrichtung längs eingebauter Antriebsstrang 100, also mit längsorientiertem Antriebsaggregat 102 und längsorientiertem Getriebe 104, veranschaulicht ist, zeigt die Fig. 20 einen Antriebsstrang 100 mit quer eingebautem Antriebsaggregat 102 bzw. Getriebe 104. Zwischen diesen liegt beispielsweise ein Drehschwingungsdämpfer 132 in Form eines Zweimassenschwungrads, dessen Sekundärseite mit einer Reibungskupplung, beispielsweise Trockenreibkupplung 134, gekoppelt ist. Eine beispielsweise ebenfalls mit Drehschwingungsdämpfer ausgebildete Kupplungsscheibe 136 überträgt das Drehmoment weiter zu dem beispielsweise als Handschaltgetriebe ausgebildeten Getriebe 104. An die Sekundärseite des Drehschwingungsdämpfers bzw. Zweimassenschwungrads 132 ist der Träger 12 der Drehschwingungsdämpfungsanordnung 200 angekoppelt. Abtriebsseitig folgen auf die Getriebeausgangswelle 116 und ein Differential 126 und die Antriebsachse mit ihren beiden Felgen 128 und Reifen 130. Auch hier sind mit St jeweilige Steifigkeiten der Antriebswellen bzw. Räder veranschaulicht.

In Fig. 21 ist ein weiteres Beispiel eines Teils eines Antriebsstrangs 100 mit einem auf ein Antriebsaggregat 102 folgenden hydrodynamischen Drehmomentwandler 150 als Anfahrelement 108 veranschaulicht. Im Gehäuse bzw. rotierenden Nassraum 106 desselben bzw. damit rotierend ist ein Pumpenrad 138 vorgesehen. Diesem axial gegenüberliegend ist ein Turbinenrad 140 vorgesehen. Zwischen dem Pumpenrad 138 und dem Turbinenrad 140 liegt ein allgemein mit 142 bezeichnetes Leitrad. Parallel zu dem hydrodynamischen Drehmomentübertragungsweg, welcher die Fluidzirkulation zwischen Pumpenrad, Turbinenrad und Leitrad umfasst, ist ein Drehmomentübertragungsweg über eine Überbrückungskupplung 144 einrichtbar. Auf die Überbrückungskupplung folgen die beiden Drehschwingungsdämpfer 110, 112, zwischen welchen eine Zwischenmasse 114 gebildet ist. An diese ist das Turbinenrad 140 ebenso wie der Träger 12 der Drehschwingungsdämpfungsanordnung 200 angekoppelt. Es sei hier darauf hingewiesen, dass die beispielsweise auch in Fig. 21 erkennbaren Drehschwingungsdämpfer einen bekannten Aufbau mit zwei Deckscheiben und einer dazwischen liegenden Zentralscheibe aufweisen können, wobei entweder die beiden Deckscheiben oder die Zentralscheibe der Primärseite und die jeweils andere Baugruppe dann der Sekundärseite zugeordnet ist. In jedem derartigen Drehschwingungsdämpfer können eine oder mehrere Federsätze parallel oder seriell, ggf. auch gestuft wirksam sein, um eine entsprechend gestufte Dämpfungscharakteristik erlangen zu können.

Über das Antriebsaggregat 102 in den Eingangsbereich des hydrodynamischen Drehmomentwandlers eingeleitete Drehschwingungen bzw. Drehungleichförmigkeiten können bei eingerückter bzw. drehmomentübertragender Überbrückungskupplung 144 zunächst in dem im Drehmomentenfluss stromaufwärts liegenden Drehschwingungsdämpfer 110 gemindert bzw. gedämpft werden. Die dann noch in die Zwischenmasse 114 eingeleiteten Drehschwingungen können unter Wirkung der an diese angekoppelten Drehschwingungsdämpfungsanordnung 200 durch entsprechende Auslegung auf eine anregende Ordnung dann weiter gemindert bzw. getilgt werden. Eine noch weitergehende Filterung bzw. Schwingungsdämpfung kann dann durch den im Drehmomentenfluss stromabwärts folgenden weiteren Drehschwingungsdämpfer 112 erfolgen.

Es ist selbstverständlich, dass hier verschiedene Variationen vorgenommen werden können. So könnte beispielsweise das Turbinenrad 140 direkt an eine Getriebeeingangswelle, also die Sekundärseite des Drehschwingungsdämpfers 112 angekoppelt werden, wodurch die Massenträgheit einer Getriebeeingangswelle erhöht wird. Dies hätte zur Folge, dass im Wirkungsbereich der Hydrodynamik des Drehmomentwandlers bei ausgerückter Überbrückungskupplung 144 keiner der beiden Drehschwingungsdämpfer 110, 112 wirksam wäre.

Bei einer weiteren Variante könnte das Turbinenrad 140 die oder einen Teil der Auslenkungsmasse 34 bereitstellen. Somit kann eine Funktionenverschmelzung und damit eine kompakte Baugröße gewährleistet werden. Eine derartige Ausgestaltung hätte zur Folge, dass immer dann, wenn die Überbrückungskupplung 144 ausgerückt ist und ein Drehmoment über das Turbinenrad 140 zu übertragen ist, auch die Drehschwingungsdämpfungsanordnung 200 zur Drehmomentübertragung genutzt wird, wobei dann die Auslegung derart sein kann, dass in diesem Zustand die Drehwinkelbegrenzungsfunktionalität der Bolzen 40 und Öffnungen 36 wirksam ist, die Rückstellelemente 42 also nicht übermäßig belastet werden. Wird die Überbrückungskupplung 144 eingerückt, ist das Turbinenrad lediglich als Auslenkungsmasse wirksam, wobei es aufgrund der fluidischen Wechselwirkung auch zu einer viskosen Dämpfung beiträgt.

Auch könnte selbstverständlich die Überbrückungskupplung 144 im Drehmomentenfluss zwischen den beiden Drehschwingungsdämpfern 110, 112 oder sogar danach liegen, wobei zu gewährleisten ist, dass das Turbinenrad 140 abtriebsseitig an die Überbrückungskupplung 144 angekoppelt ist. In entsprechender Weise könnte selbstverständlich auch der Träger 12 der Drehschwingungsdämpfungsanordnung 200 mit der Primärseite des Drehschwingungsdämpfers 110 oder der Sekundärseite des Drehschwingungsdämpfers 112 gekoppelt sein.

In Fig. 22 ist eine Ausgestaltungsvariante eines Antriebsstrangs 100 gezeigt, in welcher das Antriebsaggregat 102 sein Drehmoment über ein beispielsweise in einem rotierenden Nassraum 106 integriertes Zweimassenschwungrad 132 überträgt. An dessen Sekundärseite ist die Drehschwingungsdämpfungsanordnung 200 mit ihrem Träger 12 angebunden. Im Drehmomentenfluss folgt dann ein Anfahrelement, beispielsweise eine Reibungskupplung 134.

In Fig. 23 ist in konstruktiver Ausführung im Teillängsschnitt ein hydrodynamischer Drehmomentwandler 150 dargestellt. Dessen Gehäuse 152 stellt den rotierenden Nassraum 106 bereit und umfasst eine antriebsseitige Gehäuseschale 154 und eine abtriebsseitige Gehäuseschale 156, welche gleichzeitig auch eine Pumpenradschale bildet und an ihrer Innenseite eine Mehrzahl von in Umfangsrichtung um die Drehachse A aufeinander folgenden Pumpenradschaufeln 158 trägt. Dem so bereitgestellten Pumpenrad 138 liegt das Turbinenrad 140 mit seinen Turbinenradschaufeln 160 axial gegenüber. Zwischen dem Pumpenrad 138 und dem Turbinenrad 140 liegt das Leitrad 142 mit seinen Leitradschaufeln 162.

Die Überbrückungskupplung 144 umfasst mit der antriebsseitigen Gehäuseschale 154 zur Drehung gekoppelte antriebsseitige Reibelemente bzw. Lamellen 164 sowie mit einem Reibelemententräger 166 zur Drehung gekoppelte abtriebsseitige Reibelemente bzw. Lamellen 168. Diese können durch einen Kupplungskolben 170 zur Drehmomentübertragung bzw. zum Einrücken der Überbrückungskupplung 144 gegeneinander gepresst werden. Der im Drehmomentenfluss auf die Überbrückungskupplung 144 folgende und hier radial außen positionierte Drehschwingungsdämpfer 110 umfasst als Primärseite ein mit dem Reibelemententräger 166 gekoppeltes Zentralscheibenelement 172. Axial beidseits davon liegen Deckscheibenelemente 174, 176, welche mit ihrem radial äußeren Bereich im Wesentlichen die Sekundärseite des Drehschwingungsdämpfers 110 bereitstellen. Durch Dämpferfedern 180 des Drehschwingungsdämpfers 110 wird ein Drehmoment zwischen dem Zentralscheibenelement 172, also der Primärseite, und den Deckscheibenelementen 174, 176, also der Sekundärseite, übertragen.

Mit ihrem radial inneren Bereich bilden die Deckscheibenelemente 174, 176 eine Sekundärseite des radial innen positionierten zweiten Drehschwingungsdämpfers 112. Axial zwischen diesen miteinander fest verbundenen Deckscheibenelementen liegt ein weiteres Zentralscheibenelement 182, welches im Wesentlichen eine Sekundärseite des weiteren Drehschwingungsdämpfers 112 bereitstellt und durch Dämpferfedern 184 mit den Deckscheibenelementen 174, 176 zur Drehmomentübertragung gekoppelt ist.

Die beiden Deckscheibenelemente 174, 176 stellen im Wesentlichen auch die Zwischenmassenanordnung 114 bereit, an welche beispielsweise vermittels die beiden Deckscheibenelemente 174, 176 auch miteinander fest verbindenden Bolzen 186 der Träger 12 einer erfindungsgemäß aufgebauten Drehschwingungsdämpfungs- bzw. Tilgeranordnung 200 angekoppelt ist. Die Schwungmasse 34 der Drehschwingungsdämpfungsanordnung 200 umfasst die beiden Masseringe 30, 32 sowie die Trägerscheibe 28 und liegt axial im Wesentlichen zwischen den beiden radial gestaffelt angeordneten Drehschwingungsdämpfern 110, 112 und dem Turbinenrad 140. Durch die Formgebung des Masserings 32 mit radial innen angeschrägter Kontur kann dieser das Turbinenrad 140 axial übergreifend positioniert werden, so dass eine axial kompakte Baugröße ermöglicht ist. Die Tilgeranordnung 200 kann also gemäß Ausführungsbeispielen an die Sekundärseite wenigstens eines der drehmomentübertragenden Dreh- oder Torsionsschwingungsdämpfer 110, 112 angekoppelt sein. Bei dem drehzahladaptiven Schwingungstilger 200 handelt es sich also, allgemein gesprochen, um eine Zusatzmasse, die über ein veränderliches Federsystem an das Antriebssystem bzw. wenigstens einen der Torsionsschwingungsdämpfer 110, 112 angekoppelt werden kann. Bei der in Fig. 23 gezeigten Anbindung der Drehschwingungsdämpfungsanordnung 200 an die Sekundärseite eines Dreh- bzw. Torsionsschwingungsdämpfers 110, 112, beispielsweise innerhalb eines Drehmomentwandlers oder eines (nicht gezeigten) Zwei-Massen-Schwungrades, kann die Drehschwingungsdämpfungsanordnung 200 vergleichsweise leicht gebaut werden, da die Restanregung an dem Ort der Anbindung der Drehschwingungsdämpfungsanordnung 200 hinter den in Reihe geschalteten Dämpferfedern 180 und 184 vergleichsweise klein werden kann.

Man erkennt, dass der Träger 12 radial innen über ein Lager 188, beispielsweise Gleitlager oder Wälzkörperlager, auf einer an die Zentralscheibe 182 angebundenen Ausgangsnabe 190 der Drehschwingungsdämpferanordnung 200 drehbar gelagert ist. Mit dieser Ausgangsnabe 190 ist auch das Turbinenrad 140 beispielsweise durch Verzahnungseingriff zur gemeinsamen Drehung verbunden, so dass das über das Turbinenrad geleitete Drehmoment unter Umgehung der beiden seriell wirksamen Drehschwingungsdämpfer 110, 112 in die Abtriebsnabe 190 eingeleitet wird. Alternativ könnte, wie vorangehend bereits dargelegt, das Turbinenrad 140 an den Träger 12 bzw. allgemein die Zwischenmasse 114 angekoppelt werden oder an die Auslenkungsmasse 34 angekoppelt werden, um deren Massenträgheitsmoment zu erhöhen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Drehschwingungsdämpfungsanordnung (80; 90; 92; 94; 200) insbesondere für den Antriebsstrang (100) eines Fahrzeugs, umfassend
eine um eine Drehachse (A) drehbare Trägeranordnung (12);
eine zu der Trägeranordnung (12) in Umfangsrichtung relativ bewegliche Auslenkungsmasse (34),
wobei die Trägeranordnung (12) und die Auslenkungsmasse (34) über eine Mehrzahl in Umfangsrichtung angeordneter und sich von der Auslenkungsmasse (34) in Richtung Trägeranordnung (12) erstreckender, elastischer Rückstellelemente (42) relativ zueinander verdrehbar gekoppelt sind,
wobei ein Rückstellelement (42) jeweils um einen unter Fliehkrafteinwirkung in radialer Richtung beweglichen und dem Rückstellelement (42) zugeordneten Kraftangriffspunkt (54; 56) verformbar ist, wobei der bewegliche Kraftangriffspunkt (54; 56) vermittels einer Vorspannfeder (20) mit einer radial in Richtung Drehachse (A) wirkenden Vorspannkraft beaufschlagt ist,
**dadurch gekennzeichnet, dass**
eine Hauptachse (82) bzw. Längsachse der Vorspannfeder (20) und eine Hauptachse (84) bzw. Längsachse des Rückstellelements (42) nicht koaxial verlaufen, so dass das Rückstellelement (42) außerhalb der Vorspannfeder (20) angeordnet ist.

2. Drehschwingungsdämpfungsanordnung (80; 90; 92; 94; 200) nach Anspruch 1, **dadurch gekennzeichnet, dass** das Rückstellelement (42) in Umfangsrichtung außerhalb seiner zugeordneten Vorspannfeder (20) angeordnet ist.

3. Drehschwingungsdämpfungsanordnung (80; 90; 92; 94; 200) nach Anspruch 1 oder 2, **dadurch gekennzeichnet, dass** die Hauptachse (82) der Vorspannfeder (20) und die Hauptachse (84) des Rückstellelements (42) schräg zueinander, jeweils in radialer Richtung, verlaufen.

4. Drehschwingungsdämpfungsanordnung (80; 90; 92; 94; 200) nach Anspruch 1 oder 2, **dadurch gekennzeichnet, dass** die Hauptachse (82) der Vorspannfeder (20) und die Hauptachse (84) des Rückstellelements (42) parallel zueinander verlaufen.

5. Drehschwingungsdämpfungsanordnung (80; 90; 92; 94; 200) nach einem der vorhergehenden Ansprüche, **dadurch gekennzeichnet, dass** ein dem Rückstellelement (42) zugeordneter beweglicher Kraftangriffspunkt (54; 56) durch ein in radialer Richtung verfahrbares Fliehgewicht (16; 16') geführt wird, welches vermittels der Vorspannfeder (20) mit der radial nach innen wirkenden Vorspannkraft beaufschlagt ist.

6. Drehschwingungsdämpfungsanordnung (80; 90; 92; 94; 200) nach Anspruch 5, **dadurch gekennzeichnet, dass** eine Relativlage zwischen dem Kraftangriffspunkt (54; 56) und dem Fliehgewicht (16; 16') unter Fliehkrafteinwirkung variabel ist.

7. Drehschwingungsdämpfungsanordnung (80; 90; 92; 94; 200) nach Anspruch 6, **dadurch gekennzeichnet, dass** die Drehschwingungsdämpfungsanordnung (80; 90; 92; 94; 200) ausgebildet ist, um den Kraftangriffspunkt (54; 56) vermittels dem Fliehgewicht (16; 16') unter Fliehkrafteinwirkung in einer Führung senkrecht zur Hauptachse des zugeordneten Rückstellelements (42) zu führen, derart, dass bei niedriger Drehzahl der Drehschwingungsdämpfungsanordnung (80; 90; 92; 94; 200) der Kraftangriffspunkt (54; 56) näher zu dem Fliehgewicht (16; 16') oder der Vorspannfeder (20) positioniert ist als bei hoher Drehzahl.

8. Drehschwingungsdämpfungsanordnung (80; 90; 92; 94; 200) nach einem der vorhergehenden Ansprüche, **dadurch gekennzeichnet, dass** ein beweglicher Kraftangriffspunkt (54; 56) durch einen entlang der Hauptachse des zugeordneten Rückstellelements (42) verfahrbaren Anlagebolzen (54; 56) für das Rückstellelement (42) bereitgestellt wird.

9. Drehschwingungsdämpfungsanordnung (80; 90; 92; 94; 200) nach einem der vorhergehenden Ansprüche, **dadurch gekennzeichnet, dass** einer Vorspannfeder (20) eine Mehrzahl von zu der Vorspannfeder (20) nicht koaxial verlaufenden Rückstellelementen (42) zugeordnet ist, so dass die Kraftangriffspunkte (54; 56) der zugeordneten Rückstellelemente (42) vermittels der Vorspannfeder (20) gemeinsam unter Fliehkrafteinwirkung in radialer Richtung bewegt werden.

10. Drehschwingungsdämpfungsanordnung (80; 90; 92; 94; 200) nach Anspruch 9, **dadurch gekennzeichnet, dass** in Umfangsrichtung außerhalb der Vorspannfeder (20) und zu beiden Seiten der Vorspannfeder (20) dieser zugeordnete Rückstellelemente (42) angeordnet sind.

11. Drehschwingungsdämpfungsanordnung (80; 90; 92; 94; 200) nach einem der vorhergehenden Ansprüche, **dadurch gekennzeichnet, dass** ein unter Fliehkrafteinwirkung entlang der Hauptachse des Rückstellelements (42) geführtes Fliehgewicht (16), welches wenigstens einen Kraftangriffspunkt für das Rückstellelement (42) umfasst, mit der Vorspannfeder (20) vermittels wenigstens einem Gelenk gekoppelt ist, so dass ein Winkel zwischen der Hauptachse der Vorspannfeder (20) und dem Fliehgewicht (16) variabel ist.

12. Drehschwingungsdämpfungsanordnung (80; 90; 92; 94; 200) nach einem der vorhergehenden Ansprüche, **dadurch gekennzeichnet, dass** ein erstes mit der Vorspannfeder (20) zusammenwirkendes Rückstellelement (42) in Ruhelage der Drehschwingungsdämpfungsanordnung (80; 90; 92; 94; 200) in einer ersten Richtung vorgespannt ist und, dass ein zweites mit der Vorspannfeder (20) zusammenwirkendes Rückstellelement (42) in der Ruhelage in einer zweiten, der ersten Richtung entgegengesetzten Richtung vorgespannt ist.

13. Drehschwingungsdämpfungsanordnung (80; 90; 92; 94; 200) nach Anspruch 12, **dadurch gekennzeichnet, dass** sich durch die entgegengesetzten Vorspannungen ergebende entgegengesetzte Vorspannungskräfte in der Ruhelage betragsmäßig gleich sind.

14. Drehschwingungsdämpfungsanordnung (80; 90; 92; 94; 200) nach Anspruch 12 oder 13, **dadurch gekennzeichnet, dass** das erste Rückstellelement (42) in Ruhelage der Drehschwingungsdämpfungsanordnung (80; 90; 92; 94; 200) in der ersten Richtung durch unmittelbaren Kontakt zu einem dem ersten Rückstellelement (42) zugeordneten Kraftangriffspunkt (54) vorgespannt ist und, dass das zweites Rückstellelement (42) in der Ruhelage in der zweiten Richtung durch unmittelbaren Kontakt zu einem dem zweiten Rückstellelement (42) zugeordneten Kraftangriffspunkt (56) vorgespannt ist.

15. Drehschwingungsdämpfungsanordnung (80; 90; 92; 94; 200) nach einem der Ansprüche 12 bis 14, **dadurch gekennzeichnet, dass** jedem Rückstellelement (42) genau ein in radialer Richtung beweglicher Kraftangriffspunkt (54; 56) zugeordnet ist, wobei die jeweiligen Kraftangriffspunkte (54; 56) des ersten und des zweiten Rückstellelements (42) auf jeweils unterschiedlichen Seiten der Rückstellelemente (42) angeordnet sind, um die entgegengesetzten Vorspannungen zu erhalten.

16. Drehschwingungsdämpfungsanordnung (80; 90; 92; 94; 200) nach einem der Ansprüche 12 bis 14, **dadurch gekennzeichnet, dass** jedem Rückstellelement (42) zwei in radialer Richtung bewegliche Kraftangriffspunkte (54; 56) zugeordnet sind, wobei sich die zwei Kraftangriffspunkte (54; 56) unter Fliehkrafteinwirkung gegenüberliegend auf unterschiedlichen Seiten des jeweiligen Rückstellelements (42) radial bewegen und wobei die zwei Kraftangriffspunkte bezüglich des jeweiligen Rückstellelements (42) in der Ruhelage asymmetrisch angeordnet sind, um die entgegengesetzten Vorspannungen zu erhalten.

17. Drehschwingungsdämpfungsanordnung (80; 90; 92; 94; 200) nach einem der Ansprüche 12 bis 16, **dadurch gekennzeichnet, dass** das erste und das zweite Rückstellelement (42) ein Paar von in Umfangsrichtung unmittelbar nebeneinander angeordneten Rückstellelementen (42) bilden, und wobei die Drehschwingungsdämpfungsanordnung eine Mehrzahl von in Umfangrichtung angeordneten Paaren aufweist.

18. Drehschwingungsdämpfungsanordnung (80; 90; 92; 94; 200) nach einem der vorhergehenden Ansprüche, **dadurch gekennzeichnet, dass** das Rückstellelement (42) eine Rückstellfeder, insbesondere eine Blattfeder oder eine Stabfeder, insbesondere mit linearer Kraftkennlinie (K₃) umfasst.

19. Drehschwingungsdämpfungsanordnung (80; 90; 92; 94; 200) nach einem der vorhergehenden Ansprüche, **dadurch gekennzeichnet, dass** das Rückstellelement (42) bezüglich der Auslenkungsmasse (34) oder/und bezüglich der Trägeranordnung (12) festgelegt ist.

20. Antriebsstrang (100) für ein Fahrzeug, umfassend wenigstens eine Drehschwingungsdämpfungsanordnung (80; 90; 92; 94; 200) nach einem der vorhergehenden Ansprüche.

21. Antriebsstrang nach Anspruch 20, **dadurch gekennzeichnet, dass** der Antriebsstrang ein Anfahrelement, vorzugsweise einen hydrodynamischen Drehmomentwandler (150) oder Fluidkupplung oder nasslaufende Reibungskupplung oder Trockenreibungskupplung aufweist, wobei die wenigstens eine Drehschwingungsdämpfungsanordnung (80; 90; 92; 94; 200) im Bereich des Anfahrelements vorgesehen ist.

22. Antriebsstrang nach Anspruch 20 oder 21, **dadurch gekennzeichnet, dass** der Antriebsstrang wenigstens einen Drehschwingungsdämpfer (110; 112) mit einer Primärseite und einer gegen die Rückstellwirkung einer Federanordnung bezüglich der Primärseite drehbaren Sekundärseite umfasst, wobei die Trägeranordnung (12) der wenigstens einen Drehschwingungsdämpfungsanordnung (80; 90; 92; 94; 200) drehfest an die Primär- oder Sekundärseite des wenigstens einen Drehschwingungsdämpfers (110; 112) angebunden ist.

23. Antriebsstrang nach Anspruch 22, **dadurch gekennzeichnet, dass** der wenigstens eine Drehschwingungsdämpfer (110; 112) eine erste (180) und eine zweite (184) Federanordnungen aufweist, wobei ein Zwischenelement (114) gegen die Rückstellwirkung der ersten Federanordnung (180) bezüglich der Primärseite drehbar ist und die Sekundärseite gegen die Rückstellwirkung der zweiten Federanordnung (184) bezüglich dem Zwischenelement (114) drehbar ist.

24. Antriebsstrang nach Anspruch 23, wobei die Trägeranordnung (12) der wenigstens einen Drehschwingungsdämpfungsanordnung (80; 90; 92; 94; 200) drehfest an das Zwischenelement (114) des Drehschwingungsdämpfers (110; 112) angebunden ist.

## Claims

1. Torsional vibration damper assembly (80; 90; 92; 94; 200) in particular for the drive train (100) of a vehicle, comprising:
a carrier assembly (12) which can rotate about an axis of rotation (A);
a deflection mass (34) which can move in the circumferential direction relative to the carrier assembly (12),
wherein the carrier assembly (12) and the deflection mass (34) are coupled to one another, in such a way that they can rotate with respect to one another, by means of a multiplicity of elastic restoring elements (42) which are arranged in the circumferential direction and extend in the direction of the carrier assembly (12) from the deflection mass (34),
wherein a restoring element (42) can be deformed in each case about a force application point (54; 56) which can move in a radial direction under the effect of a centrifugal force and is assigned to the restoring element (42), wherein a prestressing force which acts radially in the direction of the axis of rotation (A) is applied to the movable force application point (54; 56) by means of a prestressing spring (20),
**characterized in that**
a main axis (82) or a longitudinal axis of the prestressing spring (20) and a main axis (84) or a longitudinal axis of the restoring element (42) do not run coaxially, with the result that the restoring element (42) is arranged outside the prestressing spring (20).

2. Torsional vibration damper assembly (80; 90; 92; 94; 200) according to Claim 1, **characterized in that** the restoring element (42) is arranged outside its assigned prestressing spring (20) in the circumferential direction.

3. Torsional vibration damper assembly (80; 90; 92; 94; 200) according to Claim 1 or 2, **characterized in that** the main axis (82) of the prestressing spring (20) and the main axis (84) of the restoring element (42) run obliquely with respect to one another, each in a radial direction.

4. Torsional vibration damper assembly (80; 90; 92; 94; 200) according to Claim 1 or 2, **characterized in that** the main axis (82) of the prestressing spring (20) and the main axis (84) of the restoring element (42) run parallel to one another.

5. Torsional vibration damper assembly (80; 90; 92; 94; 200) according to one of the preceding claims, **characterized in that** a movable force application point (54; 56) which is assigned to the restoring element (42) is guided by a centrifugal weight (16; 16') which can moved in the radial direction and to which the radially inwardly acting prestressing force is applied by means of the prestressing spring (20).

6. Torsional vibration damper assembly (80; 90; 92; 94; 200) according to Claim 5, **characterized in that** a relative position between the force application point (54; 56) and the centrifugal weight (16; 16') is variable under the effect of a centrifugal force.

7. Torsional vibration damper assembly (80; 90; 92; 94; 200) according to Claim 6, **characterized in that** the torsional vibration damper assembly (80; 90; 92; 94; 200) is designed to guide the force application point (54; 56) through the application of a centrifugal force in a guide perpendicular to the main axis of the assigned restoring element (42), by means of the centrifugal weight (16; 16') in such a way that at a low rotational speed of the torsional vibration damper assembly (80; 90; 92; 94; 200) the force application point (54; 56) is positioned closer to the centrifugal weight (16; 16') or the prestressing spring (20) than at a high rotational speed.

8. Torsional vibration damper assembly (80; 90; 92; 94; 200) according to one of the preceding claims, **characterized in that** a movable force application point (54; 56) is made available by a bearing bolt (54; 56) for the restoring element (42), which can be moved along the main axis of the assigned restoring element (42).

9. Torsional vibration damper assembly (80; 90; 92; 94; 200) according to one of the preceding claims, **characterized in that** a multiplicity of restoring elements (42) which do not run coaxially with respect to the prestressing spring (20) are assigned to a prestressing spring (20), with the result that the force application points (54; 56) of the assigned restoring elements (42) are moved together in the radial direction under the application of centrifugal force by means of the prestressing spring (20).

10. Torsional vibration damper assembly (80; 90; 92; 94; 200) according to Claim 9, **characterized in that** restoring elements (42) which are assigned to the prestressing spring (20) are arranged outside the prestressing spring (20) and on both sides thereof in the circumferential direction.

11. Torsional vibration damper assembly (80; 90; 92; 94; 200) according to one of the preceding claims, **characterized in that** a centrifugal weight (16) which is guided along the main axis of the restoring element (42) under the effect of centrifugal force and which comprises at least one force application point for the restoring element (42) is coupled to the prestressing spring (20) by means of at least one link with the result that an angle between the main axis of the prestressing spring (20) and the centrifugal weight (16) is variable.

12. Torsional vibration damper assembly (80; 90; 92; 94; 200) according to one of the preceding claims, **characterized in that** in the position of rest of the torsional vibration damper assembly (80; 90; 92; 94; 200) a first restoring element (42) which interacts with the prestressing spring (20) is prestressed in a first direction, and **in that** in the position of rest a second restoring element (42) which interacts with the prestressing spring (20) is prestressed in a second direction which is opposite the first direction.

13. Torsional vibration damper assembly (80; 90; 92; 94; 200) according to Claim 12, **characterized in that** opposing prestressing forces which result from the opposing prestresses are of equal magnitude in absolute value in the position of rest.

14. Torsional vibration damper assembly (80; 90; 92; 94; 200) according to Claim 12 or 13, **characterized in that** in the position of rest of the torsional vibration damper assembly (80; 90; 92; 94; 200) the first restoring element (42) is prestressed in the first direction by direct contact with a force application point (54) which is assigned to the first restoring element (42), and **in that** in the position of rest the second restoring element (42) is prestressed in the second direction by direct contact with a force application point (56) which is assigned to the second restoring element (42).

15. Torsional vibration damper assembly (80; 90; 92; 94; 200) according to one of Claims 12 to 14, **characterized in that** each restoring element (42) is assigned precisely one force application point (54; 56) which can move in the radial direction, wherein the respective force application points (54; 56) of the first and second restoring elements (42) are arranged on respectively different sides of the restoring elements (42) in order to receive the opposing prestresses.

16. Torsional vibration damper assembly (80; 90; 92; 94; 200) according to one of Claims 12 to 14, **characterized in that** each restoring element (42) is assigned two force application points (54; 56) which can move in the radial direction, wherein the two force application points (54; 56) move radially opposite one another on different sides of the respective restoring element (42) under the effect of centrifugal force, and wherein in the position of rest the two force application points are arranged asymmetrically with respect to the respective restoring element (42) in order to receive the opposing prestresses.

17. Torsional vibration damper assembly (80; 90; 92; 94; 200) according to one of Claims 12 to 16, **characterized in that** the first and second restoring elements (42) form a pair of restoring elements (42) which are arranged directly one against the other in the circumferential direction, and wherein the torsional vibration damper assembly has a multiplicity of pairs which are arranged in the circumferential direction.

18. Torsional vibration damper assembly (80; 90; 92; 94; 200) according to one of the preceding claims, **characterized in that** the restoring element (42) comprises a restoring spring, in particular a leaf spring or a bar spring, in particular with a linear force characteristic curve (K₃).

19. Torsional vibration damper assembly (80; 90; 92; 94; 200) according to one of the preceding claims, **characterized in that** the restoring element (42) is secured with respect to the deflection mass (34) and/or with respect to the carrier assembly (12) .

20. Drive train (100) for a vehicle, comprising at least one torsional vibration damper assembly (80; 90; 92; 94; 200) according to one of the preceding claims.

21. Drive train according to Claim 20, **characterized in that** the drive train has a starter element, preferably a hydrodynamic torque converter (150) or a fluid clutch or wet-running friction clutch or dry friction clutch, wherein the at least one torsional vibration damper assembly (80; 90; 92; 94; 200) is provided in the region of the starter element.

22. Drive train according to Claim 20 or 21, **characterized in that** the drive train comprises at least one torsional vibration damper (110; 112) with a primary side and a secondary side which can rotate with respect to the primary side counter to the restoring effect of a spring assembly, wherein the carrier assembly (12) of the at least one torsional vibration damper assembly (80; 90; 92; 94; 200) is connected in a rotationally fixed fashion to the primary side or secondary side of the at least one torsional vibration damper (110; 112) .

23. Drive train according to Claim 22, **characterized in that** the at least one torsional vibration damper (110; 112) has a first spring assembly (180) and a second spring assembly (184), wherein an intermediate element (114) can be rotated with respect to the primary side counter to the restoring effect of the first spring assembly (180), and the secondary side can be rotated with respect to the intermediate element (114) counter to the restoring effect of the second spring assembly (184).

24. Drive train according to Claim 23, wherein the carrier assembly (12) of the at least one torsional vibration damper assembly (80; 90; 92; 94; 200) is connected in a rotationally fixed fashion to the intermediate element (114) of the torsional vibration damper (110; 112).

## Revendications

1. Agencement amortisseur d'oscillations de torsion (80 ; 90 ; 92 ; 94 ; 200), en particulier pour la chaîne cinématique (100) d'un véhicule, comprenant :
un agencement de support (12) pouvant tourner autour d'un axe de rotation (A) ;
une masse de déviation (34) pouvant être déplacée par rapport à l'agencement de support (12) dans la direction périphérique,
l'agencement de support (12) et la masse de déviation (34) étant accouplés de manière rotative l'un par rapport à l'autre par le biais d'une pluralité d'éléments de rappel élastiques (42) disposés dans la direction périphérique et s'étendant depuis la masse de déviation (34) dans la direction de l'agencement de support (12),
un élément de rappel (42) pouvant être à chaque fois déformé autour d'un point d'application de force (54 ; 56) déplaçable sous l'action de la force centrifuge dans la direction radiale et associé à l'élément de rappel (42), le point d'application de force déplaçable (54, 56) étant sollicité par le biais d'un ressort de précontrainte (20) avec une force de précontrainte agissant radialement dans la direction de l'axe de rotation (A),
**caractérisé en ce que**
un axe principal (82) ou un axe longitudinal du ressort de précontrainte (20) et un axe principal (84) ou un axe longitudinal de l'élément de rappel (42) ne s'étendent pas coaxialement de telle sorte que l'élément de rappel (42) est disposé à l'extérieur du ressort de précontrainte (20).

2. Agencement amortisseur d'oscillations de torsion (80 ; 90 ; 92 ; 94 ; 200) selon la revendication 1, **caractérisé en ce que** l'élément de rappel (42) est disposé dans la direction périphérique à l'extérieur de son ressort de précontrainte (20) associé.

3. Agencement amortisseur d'oscillations de torsion (80 ; 90 ; 92 ; 94 ; 200) selon la revendication 1 ou 2, **caractérisé en ce que** l'axe principal (82) du ressort de précontrainte (20) et l'axe principal (84) de l'élément de rappel (42) s'étendent obliquement l'un par rapport à l'autre, à chaque fois dans la direction radiale.

4. Agencement amortisseur d'oscillations de torsion (80 ; 90 ; 92 ; 94 ; 200) selon la revendication 1 ou 2, **caractérisé en ce que** l'axe principal (82) du ressort de précontrainte (20) et l'axe principal (84) de l'élément de rappel (42) s'étendent parallèlement l'un à l'autre.

5. Agencement amortisseur d'oscillations de torsion (80 ; 90 ; 92 ; 94 ; 200) selon l'une quelconque des revendications précédentes, **caractérisé en ce qu'**un point d'application de force déplaçable (54 ; 56) associé à l'élément de rappel (42) est guidé par une masselotte (16 ; 16') déplaçable dans la direction radiale, laquelle est sollicitée au moyen du ressort de précontrainte (20) par la force de précontrainte agissant radialement vers l'intérieur.

6. Agencement amortisseur d'oscillations de torsion (80 ; 90 ; 92 ; 94 ; 200) selon la revendication 5, **caractérisé en ce qu'**une position relative entre le point d'application de force (54 ; 56) et la masselotte (16 ; 16') est variable sous l'effet de la force centrifuge.

7. Agencement amortisseur d'oscillations de torsion (80 ; 90 ; 92 ; 94 ; 200) selon la revendication 6, **caractérisé en ce que** l'agencement amortisseur d'oscillations de torsion (80 ; 90 ; 92 ; 94 ; 200) est réalisé de manière à guider le point d'application de force (54 ; 56) au moyen de la masselotte (16 ; 16') sous l'effet de la force centrifuge dans un guide perpendiculairement à l'axe principal de l'élément de rappel associé (42), de telle sorte que pour une faible vitesse de rotation de l'agencement amortisseur d'oscillations de torsion (80 ; 90 ; 92 ; 94 ; 200), le point d'application de force (54 ; 56) soit positionné plus près de la masselotte (16 ; 16') ou du ressort de précontrainte (20) que pour une grande vitesse de rotation.

8. Agencement amortisseur d'oscillations de torsion (80 ; 90 ; 92 ; 94 ; 200) selon l'une quelconque des revendications précédentes, **caractérisé en ce qu'**un point d'application de force déplaçable (54 ; 56) est fourni par un boulon d'appui (54 ; 56) pour l'élément de rappel (42) déplaçable le long de l'axe principal de l'élément de rappel associé (42).

9. Agencement amortisseur d'oscillations de torsion (80 ; 90 ; 92 ; 94 ; 200) selon l'une quelconque des revendications précédentes, **caractérisé en ce qu'**un ressort de précontrainte (20) est associé à une pluralité d'éléments de rappel (42) ne s'étendant pas coaxialement au ressort de précontrainte (20), de telle sorte que les points d'application de force (54 ; 56) des éléments de rappel associés (42) soient déplacés conjointement dans la direction radiale au moyen du ressort de précontrainte (20) sous l'effet de la force centrifuge.

10. Agencement amortisseur d'oscillations de torsion (80 ; 90 ; 92 ; 94 ; 200) selon la revendication 9, **caractérisé en ce que** dans la direction périphérique à l'extérieur du ressort de précontrainte (20) et des deux côtés du ressort de précontrainte (20) sont disposés des éléments de rappel (42) associés à celui-ci.

11. Agencement amortisseur d'oscillations de torsion (80 ; 90 ; 92 ; 94 ; 200) selon l'une quelconque des revendications précédentes, **caractérisé en ce qu'**une masselotte (16) guidée sous l'effet de la force centrifuge le long de l'axe principal de l'élément de rappel (42), qui comprend au moins un point d'application de force pour l'élément de rappel (42), est accouplée au ressort de précontrainte (20) au moyen d'au moins une articulation de telle sorte qu'un angle entre l'axe principal du ressort de précontrainte (20) et la masselotte (16) soit variable.

12. Agencement amortisseur d'oscillations de torsion (80 ; 90 ; 92 ; 94 ; 200) selon l'une quelconque des revendications précédentes, **caractérisé en ce qu'**un premier élément de rappel (42) coopérant avec le ressort de précontrainte (20) dans la position de repos de l'agencement amortisseur d'oscillations de torsion (80 ; 90 ; 92 ; 94 ; 200) est précontraint dans une première direction et **en ce qu'**un deuxième élément de rappel (42) coopérant avec le ressort de précontrainte (20), dans la position de repos, est précontraint dans une deuxième direction opposée à la première direction.

13. Agencement amortisseur d'oscillations de torsion (80 ; 90 ; 92 ; 94 ; 200) selon la revendication 12, **caractérisé en ce que** des forces de précontrainte opposées résultant de contraintes opposées sont relativement égales dans la position de repos.

14. Agencement amortisseur d'oscillations de torsion (80 ; 90 ; 92 ; 94 ; 200) selon la revendication 12 ou 13, **caractérisé en ce que** le premier élément de rappel (42), dans la position de repos de l'agencement amortisseur d'oscillations de torsion (80 ; 90 ; 92 ; 94 ; 200), est précontraint dans la première direction par contact direct avec un point d'application de force (54) associé au premier élément de rappel (42) et **en ce que** le deuxième élément de rappel (42), dans la position de repos, est précontraint dans la deuxième direction par contact direct avec un point d'application de force (56) associé au deuxième élément de rappel (42).

15. Agencement amortisseur d'oscillations de torsion (80 ; 90 ; 92 ; 94 ; 200) selon l'une quelconque des revendications 12 à 14, **caractérisé en ce qu'**exactement un point d'application de force déplaçable dans la direction radiale (54 ; 56) est associé à chaque élément de rappel (42), les points d'application de force respectifs (54 ; 56) du premier et du deuxième élément de rappel (42) étant à chaque fois disposés sur des côtés différents des éléments de rappel (42) afin de recevoir les précontraintes opposées.

16. Agencement amortisseur d'oscillations de torsion (80 ; 90 ; 92 ; 94 ; 200) selon l'une quelconque des revendications 12 à 14, **caractérisé en ce qu'**à chaque élément de rappel (42) sont associés deux points d'application de force déplaçables dans la direction radiale (54 ; 56), les deux points d'application de force (54 ; 56), sous l'effet de la force centrifuge, se déplaçant radialement à l'opposé l'un de l'autre sur des côtés différents de l'élément de rappel respectif (42) et les deux points d'application de force étant disposés de manière asymétrique par rapport à l'élément de rappel respectif (42) dans la position de repos, afin de recevoir les précontraintes opposées.

17. Agencement amortisseur d'oscillations de torsion (80 ; 90 ; 92 ; 94 ; 200) selon l'une quelconque des revendications 12 à 16, **caractérisé en ce que** le premier et le deuxième élément de rappel (42) forment une paire d'éléments de rappel (42) disposés directement l'un à côté de l'autre dans la direction périphérique, et l'agencement d'amortissement d'oscillations de torsion présente une pluralité de paires disposées dans la direction périphérique.

18. Agencement amortisseur d'oscillations de torsion (80 ; 90 ; 92 ; 94 ; 200) selon l'une quelconque des revendications précédentes, **caractérisé en ce que** l'élément de rappel (42) comprend un ressort de rappel, en particulier un ressort à lame ou un ressort à barre, en particulier avec une caractéristique de force linéaire (K₃).

19. Agencement amortisseur d'oscillations de torsion (80 ; 90 ; 92 ; 94 ; 200) selon l'une quelconque des revendications précédentes, **caractérisé en ce que** l'élément de rappel (42) est fixé par rapport à la masse de déviation (34) et/ou par rapport à l'agencement de support (12).

20. Chaîne cinématique (100) pour un véhicule, comprenant au moins un agencement amortisseur d'oscillations de torsion (80 ; 90 ; 92 ; 94 ; 200) selon l'une quelconque des revendications précédentes.

21. Chaîne cinématique selon la revendication 20, **caractérisée en ce que** la chaîne cinématique présente un élément de démarrage, de préférence un convertisseur de couple hydrodynamique (150) ou un embrayage fluidique ou un embrayage à friction humide ou un embrayage à friction sec, l'au moins un agencement amortisseur d'oscillations de torsion (80 ; 90 ; 92 ; 94 ; 200) étant prévu dans la région de l'élément de démarrage.

22. Chaîne cinématique selon la revendication 20 ou 21, **caractérisée en ce que** la chaîne cinématique comprend au moins un amortisseur d'oscillations de torsion (110 ; 112) avec un côté primaire et un côté secondaire pouvant tourner par rapport au côté primaire à l'encontre de l'effet de rappel d'un agencement de ressort, l'agencement de support (12) de l'au moins un agencement amortisseur d'oscillations de torsion (80 ; 90 ; 92 ; 94 ; 200) étant relié de manière solidaire en rotation au côté primaire ou au côté secondaire de l'au moins un amortisseur d'oscillations de torsion (110 ; 112).

23. Chaîne cinématique selon la revendication 22, **caractérisée en ce que** l'au moins un amortisseur d'oscillations de torsion (110 ; 112) présente un premier (180) et un deuxième (184) agencement de ressort, un élément intermédiaire (114) pouvant tourner par rapport au côté primaire à l'encontre de l'effet de rappel du premier agencement de ressort (180) et le côté secondaire pouvant tourner par rapport à l'élément intermédiaire (114) à l'encontre de l'effet de rappel du deuxième agencement de ressort (184).

24. Chaîne cinématique selon la revendication 23, dans laquelle l'agencement de support (12) de l'au moins un agencement amortisseur d'oscillations de torsion (80 ; 90 ; 92 ; 94 ; 200) est relié de manière solidaire en rotation à l'élément intermédiaire (114) de l'amortisseur d'oscillations de torsion (110 ; 112).
